(19) Europäisches Patentamt
European Patent Office
Office européen des brevets

(11) EP 3 794 666 B1

(12) **EUROPÄISCHE PATENTSCHRIFT**

(45) Veröffentlichungstag und Bekanntmachung des Hinweises auf die Patenterteilung:
**29.12.2021 Patentblatt 2021/52**

(21) Anmeldenummer: **20746667.3**

(22) Anmeldetag: **30.07.2020**

(51) Int Cl.:
***H01M 10/0563*** *(2010.01)* ***H01M 10/0568*** *(2010.01)*
***H01M 10/052*** *(2010.01)* ***H01M 4/38*** *(2006.01)*
*H01M 4/505 (2010.01)* *H01M 4/525 (2010.01)*
*H01M 4/58 (2010.01)* *H01M 4/62 (2006.01)*
*H01M 4/74 (2006.01)* *H01M 4/80 (2006.01)*
*H01M 10/054 (2010.01)* *H01M 10/0567 (2010.01)*

(86) Internationale Anmeldenummer:
**PCT/EP2020/071579**

(87) Internationale Veröffentlichungsnummer:
**WO 2021/019047 (04.02.2021 Gazette 2021/05)**

(54) **WIEDERAUFLADBARE BATTERIEZELLE**

RECHARGEABLE BATTERY CELL

CELLULE DE BATTERIE RECHARGEABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2019 EP 19189435**

(43) Veröffentlichungstag der Anmeldung:
**24.03.2021 Patentblatt 2021/12**

(73) Patentinhaber: **Innolith Technology AG**
**4052 Basel (CH)**

(72) Erfinder:
- **ZINCK, Laurent**
  **67470 Mothern (FR)**
- **WOLLFARTH, Claudia**
  **76227 Karlsruhe (DE)**
- **BIOLLAZ, Heide**
  **79761 Waldshut (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
**JP-A- 2001 143 750** **JP-B2- 4 306 858**
**US-A- 4 891 281**

- **T. GAO ET AL: "LiAlCl4.3SO2: a promising inorganic electrolyte for stable Li metal anode at room and low temperature", IONICS, Bd. 25, Nr. 9, 16. Mai 2019 (2019-05-16), Seiten 4137-4147, XP036863915, ISSN: 0947-7047, DOI: 10.1007/S11581-019-02994-7 [gefunden am 2019-05-16]**
- **C. W. PARK ET AL: "Performances of Li/LixCoO2 cells in LiAlCl4.3SO2 electrolyte", JOURNAL OF POWER SOURCES, Bd. 68, Nr. 2, 1. Oktober 1997 (1997-10-01), Seiten 338-343, XP005496930, ISSN: 0378-7753, DOI: 10.1016/S0378-7753(97)02518-4**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine wiederaufladbare Batteriezelle mit einem auf $SO_2$-basierenden Elektrolyt.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Lithium ist das Metall mit der niedrigsten Ordnungszahl und verfügt somit über die größte theoretische spezifische Kapazität von 3,884 mAh/g. Es ist das elektronegativste Metall (-3,10 V vs. Standard Wasserstoffelektrode, Abk.: SHE), wodurch die höchstmögliche Zellspannung gegen eine gegebene positive Elektrode erzeugt wird. Zudem ist es auch das leichteste Metall (0,54 g/$cm^3$), was zu einer höchstmöglichen gravimetrischen Energiedichte (Wh/Kg) bzw. spezifischen Energiedichte (Wh/L) beiträgt.

Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Wiederaufladbare Batteriezellen, welche metallisches Lithium als aktives Material der negativen Elektrode enthalten, werden auch als Lithium-Zellen bezeichnet.

Die positiven Elektroden von Lithium-Zellen sind als Insertionselektroden ausgebildet. Unter dem Begriff "Insertionselektrode" im Sinne der vorliegenden Erfindung werden Elektroden verstanden, welche eine Kristallstruktur besitzen, in die Ionen des aktiven Materials beim Betrieb der Lithium-Zelle ein- und ausgelagert werden können. Das bedeutet, dass sich die Elektrodenprozesse nicht nur an der Oberfläche der Elektrode, sondern auch innerhalb der Kristallstruktur abspielen können. Die positive Elektrode besteht zum Beispiel aus Lithiumkobaltoxid ($LiCoO_2$). Beim Laden der Lithium-Zelle werden die Ionen des aktiven Metalls aus der positiven Elektrode ausgelagert und an der negativen Elektrode als metallisches Lithium abgeschieden. Beim Entladen der Lithium-Zelle läuft der umgekehrte Prozess ab.

Auch der Elektrolyt ist ein wichtiges Funktionselement jeder wiederaufladbaren Batteriezelle. Er enthält meistens ein Lösungsmittel oder ein Lösungsmittelgemisch und mindestens ein Leitsalz. Feststoffelektrolyte oder ionische Flüssigkeiten enthalten zum Beispiel kein Lösungsmittel, sondern nur das Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten Lithium-Zellen enthalten einen Elektrolyten, der aus einem in einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat ($LiPF_6$). Das Lösungsmittelgemisch kann beispielsweise Ethylencarbonat enthalten. Der Elektrolyt LP57, der die Zusammensetzung 1 M $LiPF_6$ in EC (Ethylencarbonat) :EMC (Ethylmethylcarbonat) 3:7 aufweist, ist ein Beispiel für einen solchen Elektrolyten. Aufgrund des organischen Lösungsmittels oder Lösungsmittelgemischs werden derartige Lithium-Zellen auch als organische Lithium-Zellen bezeichnet.

Neben dem im Stand der Technik häufig verwendeten Lithiumhexafluorophosphat ($LiPF_6$) als Leitsalz werden auch andere Leitsalze für organische Lithium-Ionen-Zellen beschrieben. So beschreibt zum Beispiel das Dokument JP 4 306858 B2 (im Nachfolgenden bezeichnet als [V1]) Leitsalze in Form von Tetraalkoxy- oder Tetraaryloxyboratsalzen, die fluoriert oder teilfluoriert sein können. Die JP 2001 143750 A (im Nachfolgenden bezeichnet als [V2]) berichtet von fluorierten oder teilfluorierten Tetraalkoxyboratsalzen und Tetraalkoxyaluminatsalzen als Leitsalze. In beiden Dokumenten [V1] und [V2] werden die beschriebenen Leitsalze in organischen Lösungsmitteln oder Lösungsmittelgemischen gelöst und in organischen Lithium-Ionen-Zellen eingesetzt.

Das ungewollte Überladen von organischen Lithium-Zellen führt zu einer irreversiblen Zersetzung von Elektrolytkomponenten. Dabei findet die oxidative Zersetzung des organischen Lösungsmittels und/oder des Leitsalzes an der Oberfläche der positiven Elektrode statt. Die während dieser Zersetzung gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Lithium-Zelle verantwortlich. Die überwiegende Mehrheit an Ladeprotokollen für diese organischen Lithium-Zellen zieht die Zellspannung als Indikator für das Ladeende heran. Hierbei sind Unfälle durch den Thermal Runaway besonders wahrscheinlich bei der Verwendung von Multizellen-Batteriepacks, in denen mehrere organische Lithium-Zellen mit nicht übereinstimmenden Kapazitäten in Reihe geschaltet werden. Auch die reduktive Zersetzung des organischen Elektrolyten einer Lithium-Zelle an der negativen Elektrode ist irreversibel. Keine organischen Lösungsmittel sind thermodynamisch stabil gegenüber Lithium oder gegenüber Lithium, welches in Kohlenstoff gespeichert ist ($Li_xC_6$). Viele Lösungsmittel bilden jedoch einen Passivierungsfilm auf der Elektrodenoberfläche der negativen Elektrode. Dieser Film trennt das Lösungsmittel räumlich von der Elektrode, ist aber ionisch leitfähig und ermöglicht so den Durchgang von Lithium-Ionen. Der Passivierungsfilm, die so genannte "Solid Electrolyte Interphase" (SEI), verleiht dem System Stabilität, wodurch die Herstellung von Lithium-Zellen ermöglicht wird. Bei der Bildung der SEI wird Lithium in den Passivierungsfilm integriert. Dieser Prozess ist irreversibel und wird daher als Kapazitätsverlust beobachtet.

Der irreversible Kapazitätsverlust, auch als Deckschichtkapazität bezeichnet, hängt von der verwendeten Elektrolytformulierung und den verwendeten Elektroden ab. In organischen Lithium-Zellen dauert die Elektrolytzersetzung und Bildung von Lithiumionen-enthaltenen Schichten während des weiteren Betriebs der Lithium-Zelle oft an und ist für den Kapazitätsverlust und damit für eine kürzere Lebenszeit der Zelle verantwortlich. Auch während der Lagerung geladener Lithium-Zellen können Kapazitätsverluste auftreten. Diese sogenannte Selbstentladung können sowohl irreversiblen Prozesse (Elektrolytzersetzung) zugrunde liegen als auch reversible Prozesse, bei denen das in der negativen Elektrode gespeicherte Lithium in die Elektrolytlösung übergeht und beim nächsten Laden wieder zur Verfügung steht.

Deshalb sind organische Lithium-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Lithium-Zelle Feuer fängt oder sogar explodiert, bildet das metallische Lithium eine hochreaktive Substanz und das organische Lösungsmittel des Elektrolyten ein brennbares Material. Um solche Sicherheitsrisiken zu vermeiden, müssen zusätzliche Maßnahmen getroffen werden.

Eine aus dem Stand der Technik bekannte Weiterentwicklung sieht die Verwendung eines Elektrolyten auf Schwefeldioxid ($SO_2$)-Basis anstatt eines organischen Elektrolyten für wiederaufladbare Batteriezellen vor. Wiederaufladbare Batteriezellen, welche einen auf $SO_2$-basierenden Elektrolyten enthalten, weisen unter anderem eine hohe ionische Leitfähigkeit auf. Unter dem Begriff "auf $SO_2$-basierender Elektrolyt" ist ein Elektrolyt zu verstehen, der $SO_2$ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch $SO_2$ gewährleistet ist. Das $SO_2$ dient also als Lösungsmittel für das Leitsalz. Das Leitsalz kann mit dem gasförmigen $SO_2$ einen flüssigen Solvatkomplex bilden, wobei das $SO_2$ gebunden und der Dampfdruck gegenüber dem reinen $SO_2$ merklich gesenkt wird. Es entstehen Elektrolyte mit niederem Dampfdruck. Derartige Elektrolyten auf $SO_2$-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Die Verwendung von metallischem Lithium als aktives Material der negativen Elektrode in wiederaufladbaren Zellen bringt verschiedene Probleme mit sich. Lithium scheidet sich beim Laden nicht uniform, sondern in Form von Dendriten ab. Das unkontrollierbare Lithium-Dendriten-Wachstum führt zu einer Ansammlung eines höchst reaktiven Metalls mit einer großen Oberfläche und kann zu sicherheitskritischen Zuständen führen. Die thermodynamische Instabilität von metallischem Lithium bedingt irreversible und kontinuierliche Reaktionen zwischen diesem Lithium und dem Elektrolyten. In Folge entstehen ungewollt dicke Passivierungs-Schichten (SEI) auf der Lithium-Metall-Oberfläche, die Lithium und Elektrolytbestandteile verbrauchen. Der Innenwiderstand erhöht sich dadurch und die Lebensdauer der Lithium-Zelle wird verkürzt. Beim wiederholten Laden und Entladen können große volumetrische und morphologische Veränderungen in der Lithium-Metallanode auftreten. Die oben genannten SEI-Filme sind zu instabil, um solche signifikanten Änderungen vollständig zu unterdrücken.

Sowohl in Lithium-Zellen mit organischen Elektrolytlösungen als auch in Batteriezellen mit dem auf $SO_2$-basierenden Elektrolyten werden nach Lösungen zu den oben benannten Problemen in Zusammenhang mit einer metallischen Lithiumanode gesucht.

Die Autoren des Dokuments [V3]

"Dendrite-Free Lithium Deposition Induced by Uniformly Distributed Lithium Ions for Efficient Lithium Metal Batteries" Xin-Bing Cheng, Ting-Zheng Hou, Rui Zhang, Hong-Jie Peng, Chen-Zi Zhao, Jia-Qi Huang and Qiang Zhang Adv. Mater. 2016, 28, 2888-2895 berichten von einer Lithium-Metall-Batterie mit einem organischen Elektrolyten. Um eine dendritenfreie Lithium-Metallanode zu erhalten, verwenden Sie ein 3D-Glasfaser-Gewebe mit einer großen Anzahl polarer Gruppen zur Abscheidung von Lithium.

Die Autoren Gao et al. des Artikels aus IONICS, Bd. 25, Nr. 9, 16. Mai 2019 (2019-05-16), Seiten 4137-4147

(bezeichnet als [V4]) beschreiben die Verwendung eines auf $SO_2$-basierenden Elektrolyten mit $LiAlCl_4$ als Leitsalz für eine wiederaufladbare Lithiummetall-Batterie. Sie berichten, dass bei Raumtemperatur und niedrigeren Temperaturen im $LiAlCl_4$ • 3 $SO_2$-Elektrolyt eine stabile Passivierungsschicht (SEI) gebildet und ein Schutz für die Li-Metallanoden erreicht werden kann. Auch die Autoren Oh et al. des Artikels aus dem JOURNAL OF POWER SOURCES, Bd. 68, Nr. 2, 1. Oktober 1997 (1997-10-01), Seiten 338-343 (bezeichnet als [V5]) berichten über eine wiederaufladbare Lithiummetall-zelle mit der Kombination $Li/Li_xCoO_2$ und mit einem $LiAlCl_4$ • 3 $SO_2$ Elektrolyt. Zur Verhinderung der Degradation der Lithiummetall-Elektrode schlagen die Autoren die Zugabe von kleinen Mengen an $LiPF_6$ zum Elektrolyten vor. Das Dokument US 4 891 281 A (bezeichnet als [V6]) offenbart eine nicht-wässrige elektrochemische Lithiummetall-Zelle mit einem gut leitenden, auf $SO_2$-basierenden Elektrolyten. Dieser besitzt einen niedrigen Dampfdruck und enthält $SO_2$ und ein darin gelöstes Alkalimetall- oder Erdalkalimetallsalz als Leitsalz. Als Beispiel für ein Alkalimetallsalz wird unter anderen $LiAlCl_4$ genannt.

In der US 7,901,811 B2 (im Nachfolgenden bezeichnet als [V7]) wird eine Lithium-Metallzelle mit einem auf $SO_2$-basierenden Elektrolyten mit dem Leitsalz Lithiumtetrachloroaluminat ($LiAlCl_4$) beschrieben. Um die Nachteile der dendritischen Abscheidung zu vermeiden, wird eine aus Feststoffpartikeln gebildete poröse Struktur vorgeschlagen, die so ausgebildet und angeordnet ist, dass das beim Laden der Lithium-Metallzelle abgeschiedene Lithium von der Oberfläche des Ableiters in die Poren der porösen Struktur eindringt und dort weiter abgeschieden wird.

Ein Nachteil, der unter anderem auch bei diesen auf $SO_2$-basierenden Elektrolyten auftritt, besteht darin, dass etwaige in Anwesenheit von Restmengen an Wasser entstehende Hydrolyseprodukte mit den Zellkomponenten der wiederaufladbaren Batteriezelle reagieren und dadurch zur Bildung von unerwünschten Nebenprodukten führen. Aufgrund dessen muss bei der Herstellung derartiger wiederaufladbare Batteriezellen mit einem auf $SO_2$-basierenden Elektrolyten auf eine Minimierung des im Elektrolyten und den Zellkomponenten enthaltenen Restwassergehalts geachtet werden.

Ein weiteres Problem bei den auf $SO_2$-basierenden Elektrolyten besteht darin, dass viele, insbesondere auch für organische Lithium-Zellen bekannte Leitsalze nicht in $SO_2$ löslich sind. Messungen ergaben, dass $SO_2$ ein schlechtes Lösungsmittel für viele Leitsalze ist, wie z.B. Lithiumfluorid (LiF), Lithiumbromid (LiBr), Lithiumsulfat ($Li_2SO_4$), Lithium-bis(o-xalato)borat (LiBOB), Lithiumhexafluoroarsenat ($LiAsF_6$), Lithiumtetrafluorborat ($LiBF_4$), Trilithiumhexafluoroaluminat ($Li_3AlF_6$), Lithiumhexafluoroantimonat ($LiSbF_6$), Lithium Diflu-oro(oxalato)borat ($LiBF_2C_2O_4$), Lithium-bis(trifluoromethansulfonyl)imid (LiTFSI), Lithiummetaborat ($LiBO_2$), Lithiumaluminat ($LiAlO_2$), Lithiumtriflat ($LiCF_3SO_3$) und Lithiumchlorsulfonat ($LiSO_3Cl$). Die Löslichkeiten dieser Leitsalze liegen in $SO_2$ bei ca. $10^{-2}$ - $10^{-4}$ mol/L (siehe Tabelle 1). Bei diesen geringen Salz-Konzentrationen kann davon ausgegangen werden, dass allenfalls nur geringe Leitfähigkeiten vorliegen, die für den sinnvollen Betrieb einer wiederaufladbaren Batteriezelle nicht ausreichend sind.

Tabelle 1: Löslichkeiten verschiedener Salze in $SO_2$

| Leitsalz | Löslichkeit / mol/L in $SO_2$ | Leitsalz | Löslichkeit / mol/L in $SO_2$ |
|---|---|---|---|
| LiF | $2{,}1 \cdot 10^{-3}$ | $LiPF_6$ | $1{,}5 \cdot 10^{-2}$ |
| LiBr | $4.9 \cdot 10^{-3}$ | $LiSbF_6$ | $2.8 \cdot 10^{-4}$ |
| $Li_2SO_4$ | $2.7 \cdot 10^{-4}$ | $LiBF_2(C_2O_4)$ | $1{,}4.10^{-4}$ |
| $LiB(C_2O_4)_2$ | $3.2 \cdot 10^{-4}$ | $CF_3SO_2NLiSO_2CF_3$ | $1{,}5.10^{-2}$ |
| $Li_3PO_4$ | - | $LiBO_2$ | $2.6 \cdot 10^{-4}$ |
| $Li_3AlF_6$ | $2{,}3 \cdot 10^{-3}$ | $LiAlO_2$ | $4.3 \cdot 10^{-4}$ |
| $LiBF_4$ | $1.7 \cdot 10^{-3}$ | $LiCF_3SO_3$ | $6.3 \cdot 10^{-4}$ |
| $LiAsF_6$ | $1{,}4 \cdot 10^{-3}$ | | |

Um die Einsatzmöglichkeiten sowie Eigenschaften von wiederaufladbaren Batteriezellen, die einen auf $SO_2$-basierenden Elektrolyten enthalten, weiter zu verbessern, liegt der vorliegenden Erfindung die Aufgabe zugrunde, eine wiederaufladbare Batteriezelle mit auf $SO_2$-basierenden Elektrolyten anzugeben, die gegenüber den aus dem Stand der Technik bekannten wiederaufladbaren Batteriezellen

- verbesserte elektrische Leistungsdaten, insbesondere eine hohe Energiedichte aufweist;
- eine stabile Deckschicht auf der negativen Elektrode aufweist, wobei die Deckschichtkapazität niedrig sein sollte und im weiteren Betrieb keine weitere reduktive Elektrolytzersetzung an der negativen Elektrode auftritt;
- einen auf $SO_2$-basierenden Elektrolyten enthält, der zu einer möglichst uniformen Abscheidung von metallischem Lithium beiträgt

- einen auf $SO_2$-basierenden Elektrolyten enthält, der eine für Leitsalze gute Löslichkeit aufweist und damit ein guter Ionenleiter und elektronischer Isolator ist, damit der Ionentransport erleichtert und die Selbstentladung auf ein Minimum beschränkt werden kann;
- einen auf $SO_2$-basierenden Elektrolyten enthält, der auch gegenüber anderen Komponenten der wiederaufladbaren Batteriezelle, wie Separatoren, Elektrodenmaterialien und Zellverpackungsmaterialien, inert ist,
- gegen verschiedene Missbräuche, wie elektrische, mechanische oder thermische, robust ist;
- einen auf $SO_2$-basierenden Elektrolyten enthält, der eine gesteigerte Stabilität gegenüber Restmengen an Wasser in den Zellkomponenten von wiederaufladbaren Batteriezellen aufweist;
- ein breites elektrochemisches Fenster hat, sodass keine oxidative Elektrolytzersetzung an der positiven Elektrode auftritt;
- eine verbesserte Überladefähigkeit und Tiefentladefähigkeit und eine geringere Selbstentladung aufweist und
- eine gesteigerte Lebensdauer, insbesondere eine hohe Zahl nutzbarer Lade- und Entladezyklen zeigt.

Derartige wiederaufladbare Batteriezellen sollen insbesondere auch sehr gute elektrische Energie- und Leistungsdaten, eine hohe Betriebssicherheit und Lebensdauer, insbesondere eine hohe Zahl nutzbarer Lade- und Entladezyklen besitzen, ohne dass sich hierbei der Elektrolyt im Betrieb der wiederaufladbaren Batteriezelle zersetzt.

Gelöst wird diese Aufgabe durch eine wiederaufladbare Batteriezelle mit den Merkmalen des Anspruchs 1. Die Ansprüche 2 bis 29 beschreiben vorteilhafte Weiterbildungen der erfindungsgemäßen wiederaufladbaren Batteriezelle.

Eine erfindungsgemäße wiederaufladbare Batteriezelle umfasst ein aktives Metall, zumindest eine positive Elektrode mit einem Ableitelement, zumindest eine negative Elektrode mit einem Ableitelement, ein Gehäuse und einen Elektrolyten. Die negative Elektrode enthält zumindest im geladenen Zustand der wiederaufladbaren Batteriezelle metallisches Lithium als aktives Material.

Der Elektrolyt basiert auf $SO_2$ und enthält zumindest ein erstes Leitsalz. Dieses erste Leitsalz weist die Formel (I)

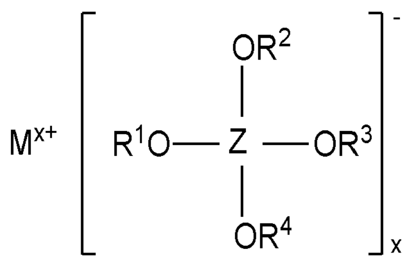

Formel (I)

auf. In Formel (I) ist M ein Metall, das ausgewählt ist aus der Gruppe, die gebildet wird von Alkalimetallen, Erdalkalimetallen, Metallen der Gruppe 12 des Periodensystems der Elemente und Aluminium. x ist eine ganze Zahl von 1 bis 3. Die Substituenten $R^1$, $R^2$, $R^3$ und $R^4$ sind unabhängig voneinander ausgewählt aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl. Das Zentralatom Z ist entweder Aluminium oder Bor.

Der in der erfindungsgemäßen wiederaufladbaren Batteriezelle verwendete auf $SO_2$-basierende Elektrolyt enthält $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist. Das erste Leitsalz ist in dem Elektrolyten gelöst und zeigt darin eine sehr gute Löslichkeit. Es kann mit dem gasförmigen $SO_2$ einen flüssigen Solvatkomplex bilden, in welchem das $SO_2$ gebunden wird. In diesem Fall sinkt der Dampfdruck des flüssigen Solvatkomplexes gegenüber dem reinen $SO_2$ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen.

Der Begriff "$C_1$-$C_{10}$ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "$C_2$-$C_{10}$ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine

C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "$C_2$-$C_{10}$ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen. Der Begriff "$C_3$-$C_{10}$ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "$C_6$-$C_{14}$ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl ($C_6H_5$ Gruppe), Naphthyl ($C_{10}H_7$ Gruppe) und Anthracyl ($C_{14}H_9$ Gruppe).

Der Begriff "$C_{5-}C_{14}$ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

Ein wiederaufladbare Batteriezelle mit einem derartigen Elektrolyt hat gegenüber wiederaufladbaren Batteriezellen mit aus dem Stand der Technik bekannten Elektrolyten den Vorteil, dass das darin enthaltene erste Leitsalz eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem oberen Potential von 4,0 Volt, weiter bevorzugt mindestens bis zu einem oberen Potential von 4,2 Volt, weiter bevorzugt mindestens bis zu einem oberen Potential von 4,4 Volt, weiter bevorzugt mindestens bis zu einem oberen Potential von 4,6 Volt, weiter bevorzugt mindestens bis zu einem oberen Potential von 4,8 Volt und besonders bevorzugt mindestens bis zu einem oberen Potential von 5,0 Volt. Somit kommt es bei der Verwendung eines solchen Elektrolyten in einer wiederaufladbaren Batteriezelle zu einer nur geringen oder sogar gar keinen Elektrolytzersetzung innerhalb der Arbeitspotentiale, also im Bereich zwischen der Ladeschlussspannung und der Entladeschlussspannung, beider Elektroden der wiederaufladbaren Batteriezelle. Dadurch können erfindungsgemäße wiederaufladbare Batteriezellen eine Ladeschlussspannung von mindestens 4,0 Volt, weiter bevorzugt von mindestens 4,4 Volt, weiter bevorzugt von mindestens 4,8 Volt, weiter bevorzugt von mindestens 5,2 Volt, weiter bevorzugt von mindestens 5,6 Volt und besonders bevorzugt von mindestens 6,0 Volt aufweisen.

Die Lebensdauer der wiederaufladbaren Batteriezelle, die diesen Elektrolyten enthält, ist gegenüber wiederaufladbaren Batteriezellen, die aus dem Stand der Technik bekannten Elektrolyten enthalten, deutlich verlängert.

Weiterhin ist eine wiederaufladbaren Batteriezelle mit einem solchem Elektrolyten auch tieftemperaturfest. Bei einer Temperatur von z.B. -40°C können noch 61% der geladenen Kapazität entladen werden. Die Leitfähigkeit des Elektrolyten bei tiefen Temperaturen ist ausreichend zum Betrieb einer Batteriezelle.

Weiterhin weist eine wiederaufladbaren Batteriezelle mit einem solchem Elektrolyten eine gesteigerte Stabilität gegenüber Restmengen an Wasser auf. Sofern sich in dem Elektrolyten noch geringe Restmengen an Wasser (im ppm-Bereich) befinden, so bildet der Elektrolyt bzw. das erste Leitsalz mit dem Wasser im Vergleich zu den aus dem Stand der Technik bekannten, auf $SO_2$-basierendenElektrolyten Hydrolyseprodukte, welche deutlich weniger aggressiv gegenüber den Zellkomponenten sind. Aufgrund dessen spielt eine Wasserfreiheit des Elektrolyts im Vergleich zu den aus dem Stand der Technik bekannten, auf $SO_2$-basierenden Elektrolyten eine weniger bedeutende Rolle. Diese Vorteile des erfindungsgemäßen Elektrolyten überwiegen den Nachteil, der dadurch entsteht, dass das erste Leitsalz nach Formel (I) eine im Vergleich zu den aus dem Stand der Technik bekannten Leitsalze deutlich höhere Anionengröße aufweist. Diese höhere Anionengröße führt zu einer im Vergleich zur Leitfähigkeit von $LiAlCl_4$ geringeren Leitfähigkeit des ersten Leitsalzes gemäß Formel (I).

Negative Elektrode

Das aktive Material der negativen Elektrode ist metallisches Lithium. Das bedeutet, dass Lithium auch das aktive Metall der wiederaufladbaren Batterie ist. Dieses wird beim Laden der wiederaufladbaren Batteriezelle auf dem Ableitelement der negativen Elektrode abgeschieden. Das bedeutet, dass die negative Elektrode neben dem metallischen Lithium als aktives Material auch ein Ableitelement umfasst. Dieses Ableitelement dient dazu, den erforderlichen elektronisch leitenden Anschluss des aktiven Materials der negativen Elektrode zu ermöglichen. Hierfür steht das Ableitelement in Kontakt mit dem an der Elektrodenreaktion der negativen Elektrode beteiligten aktiven Material. Beim Entladen der wiederaufladbaren Batteriezelle wird das metallische Lithium in Lithiumionen umgewandelt, wobei die Lithiumionen von der negativen Elektrode zur positiven Elektrode wandern. Sofern die positive Elektrode als Interkalationselektrode ausgebildet ist, befinden sich die Lithiumionen im ungeladenen Zustand der Batteriezelle mindestens

zum Teil in einer Wirtsmatrix des aktiven Materials der positiven Interkalationselektrode.

Nachfolgend sind vorteilhafte Weiterbildungen der erfindungsgemäßen wiederaufladbaren Batteriezelle im Hinblick auf die negative Elektrode beschrieben:

Eine vorteilhafte Weiterbildung der erfindungsgemäßen wiederaufladbaren Batteriezelle sieht vor, dass das elektronisch leitende Ableitelement der negativen Elektrode im entladenen Zustand der wiederaufladbaren Batteriezelle frei von metallischem Lithium ist.
Beim Laden der Batteriezelle scheidet sich metallisches Lithium auf dem elektronisch leitenden Ableitelement der negativen Elektrode ab. Beim Entladen wird das metallische Lithium im Wesentlichen vollständig aufgelöst und gelangt in Form von Ionen in die Wirtsmatrix des aktiven Materials der positiven Elektrode.

Eine weitere vorteilhafte Weiterbildung der erfindungsgemäßen Batteriezelle sieht vor, dass das elektronisch leitende Ableitelement der negativen Elektrode schon vor dem ersten Laden der wiederaufladbaren Batteriezelle metallisches Lithium umfasst. Beim Laden der Batteriezelle scheidet sich weiteres metallisches Lithium auf das elektronisch leitende Ableitelement ab. Beim Entladen wird das metallische Lithium vollständig oder nur zum Teil aufgelöst und gelangt in Form von Ionen in die Wirtsmatrix des aktiven Materials der positiven Elektrode. Das metallische Lithium, welches sich schon auf dem Ableitelement befindet, kann zum einen vor Zusammenbau der Batteriezelle auf das Ableitelement aufgebracht und zusammen mit diesem in die Batteriezelle eingebaut werden. Zum anderen kann das metallische Lithium vor dem Betrieb der Batteriezelle, d.h. vor dem ersten Laden und Entladen durch einen vorangehenden Initialisierungsladevorgang auf dem Ableitelement der negativen Elektrode abgeschieden werden.

Eine weitere vorteilhafte Weiterbildung der erfindungsgemäßen Batteriezelle sieht vor, dass das elektronisch leitende Ableitelement der negativen Elektrode vor dem ersten Laden der Batteriezelle frei von metallischem Lithium ist. Beim Laden der Batteriezelle scheidet sich metallisches Lithium auf das elektronisch leitende Ableitelement ab. Beim Entladen wird das metallische Lithium vollständig oder nur zum Teil aufgelöst und gelangt in Form von Ionen in die Wirtsmatrix des aktiven Materials der positiven Elektrode. Eine weitere vorteilhafte Weiterbildung der erfindungsgemäßen Batteriezelle sieht vor, dass das das Ableitelement der negativen Elektrode zumindest teilweise aus einem lithiumspeichernden Material ausgebildet ist. Bei einer solchen Weiterbildung wird beim Laden der Batteriezelle zunächst ein Teil des aus der Elektrodenreaktion resultierenden Lithiums in dem elektronisch leitenden Ableitelement aus dem lithiumspeichernden Material gespeichert. Beim weiteren Laden der Batteriezelle scheidet sich dann metallisches Lithium auf das elektronisch leitende Ableitelement ab. Beim Entladen wird das metallische Lithium vollständig oder nur zum Teil aufgelöst und gelangt in Form von Ionen in die Wirtsmatrix des aktiven Materials der positiven Elektrode.

Das lithiumspeichernde Material kann zum Beispiel das Insertionsmaterial Kohlenstoff, insbesondere in der Modifikation Graphit, sein. Es kann auch ein mit Lithium Legierungsbildendes Material, wie beispielsweise Lithiumspeichernde Metalle und Metalllegierungen (z.B. Si, Ge, Sn, $SnCo_xC_y$, $SnSi_x$ und dergleichen, dabei bevorzugt Silizium) oder Oxide der Lithium-speichernden Metalle und Metalllegierungen (z.B. $SnO_x$, $SiO_x$, oxidische Gläser von Sn, Si und dergleichen) oder ein Lithium-Interkalations-Material sein, welches keinen Kohlenstoff enthält, wie beispielsweise Lithium-Titanate, insbesondere $Li_4Ti_5O_{12}$. Auch Konversions-Materialien wie beispielsweise Übergangsmetalloxide können als lithiumspeichernde Materialien verwendet werden.

Eine weitere vorteilhafte Weiterbildung der erfindungsgemäßen Batteriezelle sieht vor, dass das Ableitelement der negativen Elektrode ein planares Ableitelement in Form eines dünnen Metallblechs oder einer dünnen Metallfolie ausgebildet ist. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 $\mu$m bis 20$\mu$m auf. Das aktive Material der negativen Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 $\mu$m bis 50 $\mu$m auf. Eine Dicke des planaren Ableitelements im Bereich von 10 $\mu$m bis 30 $\mu$m ist bevorzugt. Bei der Verwendung von planaren Ableitelementen kann die negative Elektrode eine Gesamtdicke von mindestens 20 $\mu$m, bevorzugt mindestens 40 $\mu$m und besonders bevorzugt mindestens 60 $\mu$m aufweisen. Die maximalen Dicke beträgt höchstens 200 $\mu$m , bevorzugt höchstens 150 $\mu$m und besonders bevorzugt höchstens 100 $\mu$m. Die flächenspezifische Kapazität der negativen Elektrode bezogen auf die Beschichtung einer Seite weist bei der Verwendung eines planaren Ableitelements im geladenen Zustand der Batteriezelle vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$, 15 $mAh/cm^2$, 20 $mAh/cm^2$, 25 $mAh/cm^2$.

Weiterhin besteht auch die Möglichkeit, dass das Ableitelement der negativen Elektrode dreidimensional in Form einer porösen Metallstruktur, insbesondere in Form eines Metallschaums ausgebildet sein kann. Der Begriff "dreidimensionale poröse Metallstruktur" bezeichnet dabei jede aus Metall bestehende Struktur, die sich nicht nur wie das dünne Metallblech bzw. die Metallfolie über Länge und Breite der flächigen Elektrode erstreckt, sondern auch über deren Dickendimension. Die dreidimensionale poröse Metallstruktur ist derartig porös, dass das aktive Material der negativen

Elektrode, also metallisches Lithium, in den Poren der Metallstruktur abgeschieden werden kann. Bei der Menge an abgeschiedenem aktivem Material handelt es sich um die Beladung der negativen Elektrode. Wenn das Ableitelement dreidimensional in Form einer porösen Metallstruktur, insbesondere in Form eines Metallschaums ausgebildet ist, dann weist die negative Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Die Dicke der Elektroden ist in diesem Fall deutlich größer im Vergleich zu negativen Elektroden, welche bei organischen Lithium-Zellen Anwendung finden. Eine weitere vorteilhafte Ausgestaltung sieht vor, dass die flächenspezifische Kapazität der negativen Elektrode im geladenen Zustand der Batteriezelle bei der Verwendung eines dreidimensionalen Ableitelements insbesondere in Form eines Metallschaums, vorzugsweise mindestens 2,5 $mAh/cm^2$ beträgt, wobei folgende Werte in dieser Reihenfolge weiter bevorzugt sind: 5 $mAh/cm^2$, 15 $mAh/cm^2$, 25 $mAh/cm^2$, 35 $mAh/cm^2$, 45 $mAh/cm^2$.

Eine weitere vorteilhafte Weiterbildung der erfindungsgemäßen Batteriezelle sieht vor, dass die negative Elektrode ein Bindemittel aufweist. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

Elektrolyt

Nachfolgend sind vorteilhafte Weiterbildungen der wiederaufladbaren Batteriezelle im Hinblick auf den auf $SO_2$-basierenden Elektrolyten beschrieben.

In einer weiteren vorteilhaften Ausgestaltung der wiederaufladbaren Batteriezellen sind die Substituenten $R^1$, $R^2$, $R^3$ und $R^4$ des ersten Leitsalzes unabhängig voneinander ausgewählt aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

Der Begriff "$C_1$-$C_6$ Alkyl" umfasst im Fall dieser vorteilhaften Ausgestaltung des auf $SO_2$-basierenden Elektrolyten lineare oder verzweigte gesättigte Kohlenwasserstoffgruppen mit einem bis sechs Kohlenwasserstoffgruppen, insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl und iso-Hexyl. Hierunter sind $C_2$-$C_4$ Alkyle bevorzugt. Besonders bevorzugt sind die $C_2$-$C_4$ Alkyle 2-Propyl, Methyl und Ethyl.

Der Begriff "$C_2$-$C_6$ Alkenyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl und 1-Hexenyl, wobei $C_2$-$C_4$ Alkenyle bevorzugt sind. Besonders bevorzugt sind Ethenyl und 1-Propenyl. Der Begriff "$C_2$-$C_6$-Alkinyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Dreifachbindung aufweisen. Hierunter fallen insbesondere Ethinyl, 1-Propinyl, 2-Propinyl, 1-n-Butinyl, 2-n-Butinyl, iso-Butinyl, 1-Pentinyl und 1- Hexinyl. Bevorzugt hierunter sind C2-C4-Alkinyle.

Der Begriff "$C_3$-$C_6$ Cycloalkyl" umfasst im Fall dieser vorteilhaften Ausgestaltung des auf $SO_2$-basierenden Elektrolyten zyklische gesättigte Kohlenwasserstoffgruppen mit drei bis sechs Kohlenstoffatomen. Hierunter fallen insbesondere Cyclopropyl, Cyclobutyl, Cyclopentyl und Cyclohexyl.

Der Begriff "$C_5$-$C_7$ Heteroaryl" umfasst im Fall dieser vorteilhaften Ausgestaltung des auf $SO_2$-basierenden Elektrolyten Phenyl und Naphtyl.

Zur Verbesserung der Löslichkeit des ersten Leitsalzes in dem auf $SO_2$-basierenden Elektrolyten sind die Substituenten $R^1$, $R^2$, $R^3$ und $R^4$ in einer weiteren vorteilhaften Ausgestaltung der wiederaufladbaren Batteriezelle durch

mindestens ein Fluoratom und/oder durch mindestens eine chemische Gruppe substituiert, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl. Die chemischen Gruppen $C_1$-$C_4$-Alkyl, $C_2$-$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen. Substituiert bedeutet in diesem Zusammenhang, dass einzelne Atome oder Atomgruppen der Substituenten $R^1$, $R^2$, $R^3$ und $R^4$ durch das Fluoratom und/oder durch die chemische Gruppe ersetzt sind.

Eine besonders hohe Löslichkeit des ersten Leitsalzes in dem auf $SO_2$-basierenden Elektrolyten kann dadurch erreicht werden, dass zumindest einer der Substituenten $R^1$, $R^2$, $R^3$ und $R^4$ eine $CF_3$-Gruppe oder eine $OSO_2CF_3$-Gruppe ist.

In einer weiteren vorteilhaften Weiterbildung der wiederaufladbaren Batteriezelle ist das erste Leitsalz ausgewählt aus der Gruppe, die gebildet wird von

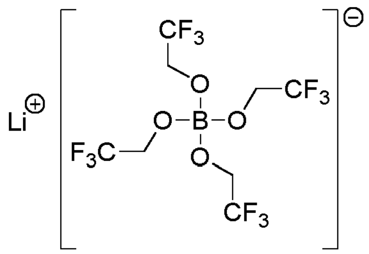

$Li[B(OCH_2CF_3)_4]$

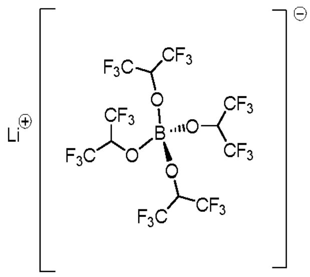

$Li[B(OCH(CF_3)_2)_4]$

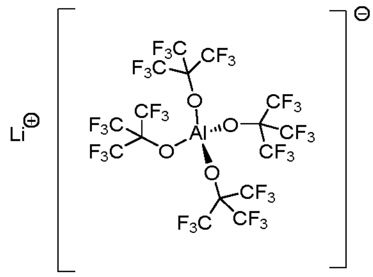

$Li[Al(OC(CF_3)_3)_4]$

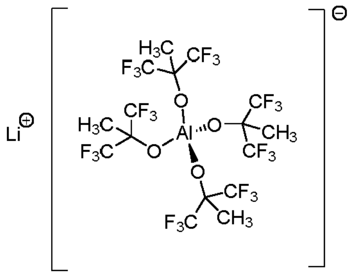

$Li[Al(OC(CH_3)(CF_3)_2)_4]$

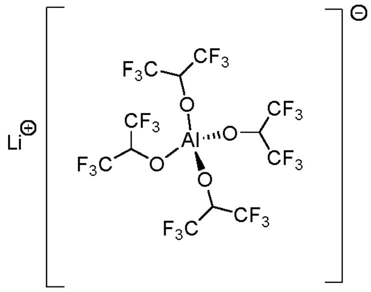

$Li[Al(OCH(CF_3)_2)_4]$.

Um die Leitfähigkeit und/oder weitere Eigenschaften des Elektrolyten an einen gewünschten Wert anzupassen, weist der Elektrolyt in einer weiteren vorteilhaften Ausgestaltung der erfindungsgemäßen wiederaufladbaren Batteriezelle zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer weiteren vorteilhaften Ausgestaltung der erfindungsgemäßen wiederaufladbaren Batteriezelle ist das zweite Leitsalz eine Alkalimetallverbindung, insbesondere eine Lithiumverbindung. Die Alkalimetallverbindung oder die Lithiumverbindung sind ausgewählt aus der Gruppe, die gebildet wird von einem Aluminat, einem Halogenid, einem Oxalat, einem Borat, einem Phosphat, einem Arsenat und einem Gallat. Vorzugsweise ist das zweite Leitsalz ein Lithiumtetrahalogenoaluminat, insbesondere $LiAlCl_4$.

Des Weiteren enthält der Elektrolyt in einer weiteren vorteilhaften Ausgestaltung der erfindungsgemäßen wiederaufladbaren Batteriezelle zumindest ein Additiv. Dieses Additiv ist vorzugsweise ausgewählt aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluor(oxalato)borat, Lithiumtetrafluor(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 °C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und

acyclische Anhydride und halogenierte organische Heterocyclen.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Weiterbildung der erfindungsgemäßen wiederaufladbaren Batteriezelle sieht vor, dass der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält. Der Elektrolyt kann auch sehr hohe molare Anteile an $SO_2$ enthalten, wobei der bevorzugte obere Grenzwert mit 2600 Mol $SO_2$ je Mol Leitsalz angegeben werden kann und Obergrenzen von 1500, 1000, 500 und 100 Mol $SO_2$ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf $SO_2$-basierende Elektrolyte mit einem derartigen Konzentrationsverhältnis zwischen $SO_2$ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an $SO_2$ im Elektrolyten wirkt sich auf dessen Leitfähigkeit aus. Somit kann durch die Wahl der $SO_2$-Konzentration die Leitfähigkeit des Elektrolyten an die geplante Verwendung einer mit diesem Elektrolyten betriebenen wiederaufladbaren Batteriezelle angepasst werden.

Der Gesamtgehalt von $SO_2$ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% $SO_2$ bezogen auf die Gesamtmenge des in der wiederaufladbaren Batteriezelle enthaltenen Elektrolyten enthalten, wobei Werte von 20 Gew% $SO_2$, 40 Gew% $SO_2$ und 60 Gew% $SO_2$ weiter bevorzugt sind. Der Elektrolyt kann auch bis zu 95 Gew% $SO_2$ enthalten, wobei Maximalwerte von 80 Gew% $SO_2$ und 90 Gew% $SO_2$ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf $SO_2$-basierenden Elektrolyten betriebenen wiederaufladbaren Batteriezelle. Besonders bevorzugt ist der auf $SO_2$-basierende Elektrolyt im Wesentlichen frei von organischen Lösungsmitteln.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes,
(iv) 0 bis 10 Gew.-% des Additivs und
(v) 0 bis 50 Gew.-% eines organischen Lösungsmittels.

Positive Elektrode

Nachfolgend sind vorteilhafte Weiterbildungen der erfindungsgemäßen wiederaufladbaren Batteriezelle im Hinblick auf die positive Elektrode beschrieben:
Eine vorteilhafte Weiterbildung der erfindungsgemäßen wiederaufladbaren Batteriezelle sieht vor, dass die positive Elektrode mindestens bis zu einem oberen Potenzial von 4,0 Volt, bevorzugt bis zu einem Potenzial von 4,4 Volt weiter bevorzugt von mindestens einem Potenzial von 4,8 Volt, weiter bevorzugt mindestens bis zu einem Potenzial von 5,2 Volt, weiter bevorzugt mindestens bis zu einem Potenzial von 5,6 Volt und besonders bevorzugt mindestens bis zu einem Potenzial von 6,0 Volt geladen werden kann.

Die positive Elektrode enthält in einer weiteren vorteilhaften Weiterbildung der erfindungsgemäßen wiederaufladbaren Batteriezelle mindestens ein aktives Material. Dieses kann Ionen des aktiven Metalls speichern und während des Betriebs der Batteriezelle die Ionen des aktiven Metalls abgeben und wieder aufnehmen.

Die positive Elektrode enthält in einer weiteren vorteilhaften Weiterbildung der erfindungsgemäßen wiederaufladbaren Batteriezelle zumindest eine Interkalationsverbindung. Unter dem Begriff "Interkalationsverbindung" ist im Sinne der vorliegenden Erfindung eine Unterkategorie der zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen. Die positive Elektrode enthält in einer weiteren vorteilhaften Weiterbildung der erfindungsgemäßen wiederaufladbaren Batteriezelle als aktives Material zumindest eine Umwandlungsverbindung. Unter dem Begriff "Umwandlungsverbindungen" sind im Sinne der vorliegenden Erfindung Materialien zu verstehen, die während der elektrochemischen Aktivität andere Materialien formen; d.h. während des Ladens und Entladens der Batteriezelle werden chemische Bindungen gebrochen und neu geknüpft. Während der Aufnahme oder Abgabe der Ionen des aktiven Metalls kommt es in der Matrix der Umwandlungsverbindung zu strukturellen Änderungen.

Das aktive Material weist in einer weiteren vorteilhaften Weiterbildung der erfindungsgemäßen wiederaufladbaren Batteriezelle die Zusammensetzung $Li_xM'_yM''_zO_a$ auf, worin

- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0 sind;
- z eine Zahl größer oder gleich 0 ist; und
- a eine Zahl ist größer 0.

Die Indizes y und z in der Zusammensetzung $Li_xM'_yM''_zO_a$ beziehen sich dabei auf die Gesamtheit der Metalle und Elemente, die durch M' bzw. M" repräsentiert werden. Umfasst zum Beispiel M' zwei Metalle $M'^1$ und $M'^2$, so gilt für den Index y: y=y1+y2, wobei y1und y2 die Indizes der Metalle $M'^1$ und $M'^2$ darstellen. Die Indizes x, y, z und a müssen so gewählt werden, dass eine Ladungsneutralität innerhalb der Zusammensetzung herrscht. Beispiele für Verbindungen bei denen M' zwei Metalle umfasst sind Lithiumnickelmangancobaltoxide der Zusammensetzung $Li_xNi_{y1}Mn_{y2}Co_zO_2$ mit $M'^1$=Ni, $M'^2$=Mn und M"=Co, wobei y1 und y2 unabhängig voneinander Zahlen größer 0 sind. Beispiele für Verbindungen in denen z=0 ist, die also kein weiteres Metall oder Element M" besitzen sind Lithiumkobaltoxide $Li_xCo_yO_a$.

Umfasst zum Beispiel M" zwei Elemente, zum einen ein Metall $M''^1$ und zum anderen Phosphor als $M''^2$, so gilt für den Index z: z=z1+z2, wobei z1 und z2 die Indizes des Metalls $M''^1$ und des Phosphors ($M''^2$) darstellen. Die Indizes x, y, z und a müssen so gewählt werden, dass eine Ladungsneutralität innerhalb der Zusammensetzung herrscht. Beispiele für Verbindungen bei denen M" ein Metall $M''^1$ und Phosphor als $M''^2$ umfasst sind Lithiumeisenmanganphosphate $Li_xFe_yMn_{z1}P_{z2}O_4$ mit M'=Fe, $M''^1$=Mn und $M''^2$=P und z2=1. In einer weiteren Zusammensetzung kann M" zwei Nichtmetalle, zum Beispiel Fluor als $M''^1$ und Schwefel als $M''^2$, umfassen. Beispiele für solche Verbindungen sind Lithiumeisenfluorsulfate $Li_xFe_yF_{z1}S_{z2}O_4$ mit M'=Fe, $M''_1$=F und $M''_2$=P.

Eine vorteilhafte Weiterbildung der erfindungsgemäßen wiederaufladbaren Batteriezelle sieht vor, dass M' aus den Metallen Nickel und Mangan besteht und M" Cobalt ist. Es handelt sich dabei um Zusammensetzungen der Formel $Li_xNi_{y1}Mn_{y2}Co_zO_2$ (NMC), d.h. um Lithiumnickelmangancobaltoxide, die die Struktur von Schichtoxiden besitzen. Beispiele für diese aktiven Materialien aus Lithiumnickelmangancobaltoxid sind $LiNi_{1/3}Mn_{1/3}Co_{1/3}O_2$ (NMC111), $LiNi_{0.6}Mn_{0.2}CO_{0.2}O_2$ (NMC622) und $LiNi_{0.8}Mn_{0.1}Co_{0.1}O_2$ (NMC811). Weitere Verbindungen aus Lithiumnickelmangancobaltoxid können die Zusammensetzung $LiNi_{0,5}Mn_{0,3}Co_{0,2}O_2$, $LiNi_{0,5}Mn_{0,25}Co_{0,25}O_2$, $LiNi_{0,52}Mn_{0,32}Co_{0,16}O_2$, $LiNi_{0,55}Mn_{0,30}Co_{0,15}O_2$, $LiNi_{0,58}Mn_{0,14}Co_{0,28}O_2$, $LiNi_{0,64}Mn_{0,18}Co_{0,18}O_2$, $LiNi_{0,65}Mn_{0,27}Co_{0,08}O_2$, $LiNi_{0,7}Mn_{0,2}Co_{0,1}O_2$, $LiNi_{0,7}Mn_{0,15}Co_{0,15}O_2$, $LiNi_{0.72}Mn_{0.10}Co_{0.18}O_2$, $LiNi_{0,76}Mn_{0,14}Co_{0,10}O_2$, $LiNi_{0,86}Mn_{0,04}CO_{0,10}O_2$,

$LiNi_{0,90}Mn_{0,05}Co_{0,05}O_2$, $LiNi_{0,95}Mn_{0,025}Co_{0,025}O_2$ oder eine Kombination davon aufweisen. Mit diesen Verbindungen lassen sich positive Elektroden für wiederaufladbare Batteriezellen mit einer Zellspannung von über 4,6 Volt herstellen.

Eine weitere vorteilhafte Weiterbildung der erfindungsgemäßen wiederaufladbaren Batteriezelle sieht vor, dass es sich bei dem aktiven Material um ein Metalloxid handelt, welches reich an Lithium und Mangan ist (Lithium- and Manganese-Rich Oxide Material). Diese Materialien können mit folgenden Formeln beschrieben werden: $Li_xMn_yM''_zO_a$. M' der oben beschriebenen Formel $Li_xM'_yM''_zO_a$ stellt also das Metall Mangan (Mn) dar. Der Index x ist hier größer oder gleich 1, der Index y ist größer als der Index z bzw. größer als die Summe der Indizes z1+z2+z3 etc.. Umfasst z.B. M" zwei Metalle $M''^1$ und $M''^2$ mit den Indizes z1 und z2 (z.B. $Li_{1.2}Mn_{0.525}Ni_{0.175}C0_{0.1}O_2$ mit $M''^1$=Ni z1=0,175 und $M''^2$=Co z2=0,1) so gilt für den Index y: y>z1+z2, Der Index z ist größer oder gleich 0 ist und der Index a ist größer 0. Die Indizes x, y, z und a müssen so gewählt werden, dass eine Ladungsneutralität innerhalb der Zusammensetzung herrscht. Metalloxide, welche reich an Lithium und Mangan sind, können auch durch die Formel $mLi_2MnO_3 \cdot (1-m)LiM'O_2$ mit $0 < m < 1$ beschrieben werden. Beispiele für derartige Verbindungen sind $Li_{1.2}Mn_{0.525}Ni_{0.175}Co_{0.1}O_2$, $Li_{1.2}Mn_{0.6}Ni_{0.2}O_2$ oder $Li_{1.2}Ni_{0.13}Co_{0.13}Mn_{0.54}O_2$.

Eine weitere vorteilhafte Weiterbildung der erfindungsgemäßen wiederaufladbaren Batteriezelle sieht vor, dass die Zusammensetzung die Formel $Li_xM'_yM''_zO_4$ besitzt. Bei diesen Verbindungen handelt es sich um Spinell-Strukturen. Zum Beispiel können M' Kobalt und M" Mangan sein. In diesem Fall handelt es sich bei dem aktiven Material um Lithiumcobaltmanganoxid ($LiCoMnO_4$). Mit $LiCoMnO_4$ lassen sich positive Elektroden für wiederaufladbare Batteriezellen mit einer Zellspannung von über 4,6 Volt herstellen. Dieses Li-$CoMnO_4$ ist vorzugsweise $Mn^{3+}$frei. In einem weiteren Beispiel können M' Nickel und M" Mangan sein. In diesem Fall handelt es sich bei dem aktiven Material um Lithiumnickelmanganoxid ($LiNiMnO_4$). Die molaren Anteile der beiden Metalle M' und M" können variieren. Lithiumnickelmanganoxid kann zum Beispiel die Zusammensetzung $LiNi_{0.5}Mn_{1.5}O_4$ besitzen.

Die positive Elektrode enthält als aktives Material in einer weiteren vorteilhaften Weiterbildung der erfindungsgemäßen wiederaufladbaren Batteriezelle zumindest ein aktives Material, welches eine Umwandlungsverbindung darstellt. Umwandlungsverbindungen durchlaufen während der Aufnahme des aktiven Metalls, z.B. Lithium oder Natrium, eine Festkörper-Redoxreaktion bei der sich die Kristallstruktur des Materials ändert. Dieses geschieht unter dem Aufbrechen und Rekombinieren von chemischen Bindungen. Vollständig reversible Reaktionen von Umwandlungsverbindungen können z.B. folgendermaßen lauten:

$$\text{Typ A:} \quad MX_z + y\,Li \leftrightarrow M + z\,Li_{(y/z)}X$$

$$\text{Typ B:} \quad X + y\,Li \leftrightarrow Li_yX$$

Beispiele für Umwandlungsverbindungen sind $FeF_2$, $FeF_3$, $CoF_2$, $CuF_2$, $NiF_2$, $BiF_3$, $FeCl_3$, FeCl2, $CoCl_2$, $NiCl_2$, $CuCl_2$, AgCl, LiCl, S, $Li_2S$, Se, $Li_2Se$, Te, I und Lil.

In einer weiteren vorteilhaften Weiterbildung der erfindungsgemäßen Batteriezelle weist die Verbindung die Zusammensetzung $Li_xM'_yM''^1_{z1}\,M''^2_{z2}O_4$ auf, worin $M''^1$ mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente, $M''^2$ Phosphor ist, z1 eine Zahl größer oder gleich 0 ist und z2 den Wert 1 hat. Bei der Verbindung mit der Zusammensetzung $Li_xM'_yM''^1_{z1}\,M''^2{z_2}O_4$ handelt es sich um Lithiummetallphosphate. Insbesondere weist die Verbindung die Zusammensetzung $Li_xFe_y$-$Mn_{z1}P_{z2}O_4$ auf. Beispiele für Lithiummetallphosphate sind Lithiumeisenphosphat ($LiFePO_4$) oder Lithiumeisenmanganphosphate ($Li(Fe_yMn_z)PO_4$). Ein Beispiel für ein Lithiumeisenmanganphosphat ist das Phosphat der Zusammensetzung $Li(Fe_{0.3}Mn_{0.7})PO_4$. Auch Lithiummetallphosphate anderer Zusammensetzungen können für die erfindungsgemäße Batteriezelle verwendet werden.

Eine weitere vorteilhafte Weiterbildung der erfindungsgemäßen wiederaufladbaren Batteriezelle sieht vor, dass die positive Elektrode zumindest eine Metallverbindung enthält. Diese Metallverbindung ist ausgewählt aus der Gruppe, die gebildet wird von einem Metalloxid, einem Metallhalogenid und einem Metallphosphat. Vorzugsweise ist das Metall dieser Metallverbindung ein Übergangsmetall der Ordnungszahlen 22 bis 28 des Periodensystems der Elemente, insbesondere Kobalt, Nickel, Mangan oder Eisen.

Eine weitere vorteilhafte Weiterbildung der erfindungsgemäßen wiederaufladbaren Batteriezelle sieht vor, dass die positive Elektrode zumindest eine Metallverbindung enthält, die die chemische Struktur eines Spinells, eines Schichtoxids, einer Umwandlungsverbindung oder einer Polyanionischen Verbindung hat.

Es liegt im Rahmen der Erfindung, dass die positive Elektrode als aktives Material mindestens eine der beschriebenen Verbindungen oder eine Kombination der Verbindungen enthält. Unter einer Kombination der Verbindungen versteht man eine positive Elektrode, die mindestens zwei der beschriebenen Materialien enthält.

Eine weitere vorteilhafte Weiterbildung der erfindungsgemäßen Batteriezelle sieht vor, dass die positive Elektrode ein Ableitelement aufweist. Das bedeutet, dass die positive Elektrode neben dem aktiven Material auch ein Ableitelement umfasst. Dieses Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material.

Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 $\mu$m bis 20$\mu$m auf. Das aktive Material der positiven Elektrode ist vorzugsweise auf die Oberfläche des dünnen Metallblechs, der dünnen Metallfolie oder der mit Metall beschichteten Kunststofffolie aufgebracht. Das aktive Material kann auf der Vorderund/oder der Rückseite des planaren Ableitelements aufgebracht sein. Derartige planare Ableitelemente weisen eine Dicke im Bereich von 5 $\mu$m bis 50 $\mu$m auf. Eine Dicke des planaren Ableitelements im Bereich von 10 $\mu$m bis 30 $\mu$m ist bevorzugt. Bei der Verwendung von planaren Ableitelementen kann die positive Elektrode eine Gesamtdicke von mindestens 20 $\mu$m, bevorzugt mindestens 40 $\mu$m und besonders bevorzugt mindestens 60 $\mu$m aufweise. Die maximalen Dicke beträgt höchstens 200 $\mu$m, bevorzugt höchstens 150 $\mu$m und besonders bevorzugt höchstens 100 $\mu$m. Die flächenspezifische Kapazität der positiven Elektrode bezogen auf die Beschichtung einer Seite weist bei der Verwendung eines planaren Ableitelements vorzugsweise mindestens 0,5 mAh/cm$^2$ auf, wobei folgende Werte in dieser Reihenfolge weiter bevorzugt sind: 1 mAh/cm$^2$, 3 mAh/cm$^2$, 5 mAh/cm$^2$, 10 mAh/cm$^2$, 15 mAh/cm$^2$, 20 mAh/cm$^2$

Weiterhin besteht auch die Möglichkeit, dass das Ableitelement der positiven Elektrode dreidimensional in Form einer porösen Metallstruktur, insbesondere in Form eines Metallschaums ausgebildet ist. Die dreidimensionale poröse Metallstruktur ist derartig porös, dass das aktive Material der positiven Elektrode in die Poren der Metallstruktur eingearbeitet werden kann. Bei der Menge an eingearbeitetem bzw. aufgebrachten aktivem Material handelt es sich um die Beladung der positiven Elektrode. Wenn das Ableitelement dreidimensional in Form einer porösen Metallstruktur, insbesondere in Form eines Metallschaums ausgebildet ist, dann weist die positive Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Eine weitere vorteilhafte Ausgestaltung sieht vor, dass die flächenspezifische Kapazität der positiven Elektrode bei der Verwendung eines dreidimensionalen Ableitelements, insbesondere in Form eines Metallschaums vorzugsweise mindestens 2,5 mAh/cm$^2$ beträgt, wobei folgende Werte in dieser Reihenfolge weiter bevorzugt sind: 5 mAh/cm$^2$, 15 mAh/cm$^2$, 25 mAh/cm$^2$, 35 mAh/cm$^2$, 45 mAh/cm$^2$, 55 mAh/cm$^2$, 65 mAh/cm$^2$, 75 mAh/cm$^2$. Wenn das Ableitelement dreidimensional in Form einer porösen Metallstruktur, insbesondere in Form eines Metallschaums ausgebildet ist, beträgt die Menge des aktiven Materials der positiven Elektrode, d.h. die Beladung der Elektrode, bezogen auf ihre Fläche, mindestens 10 mg/cm$^2$, bevorzugt mindestens 20 mg/cm$^2$, weiter bevorzugt mindestens 40 mg/cm$^2$, weiter bevorzugt mindestens 60 mg/cm$^2$, weiter bevorzugt mindestens 80 mg/cm$^2$ und besonders bevorzugt mindestens 100 mg/cm$^2$. Diese Beladung der positiven Elektrode wirkt sich positiv auf den Ladevorgang sowie den Entladevorgang der wiederaufladbaren Batteriezelle aus.

Die positive Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der positiven Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vor.

Aufbau der wiederaufladbaren Batteriezelle

Nachfolgend sind vorteilhafte Weiterbildungen der erfindungsgemäßen wiederaufladbaren Batteriezelle im Hinblick auf deren Aufbau beschrieben:

Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere positive Elektroden umfasst, die alternierend gestapelt in dem Gehäuse angeordnet sind. Hierbei sind die positiven Elektroden und die negativen Elektroden vorzugsweise jeweils durch Separatoren voneinander elektrisch getrennt.

Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE). Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.

Es liegt auch im Rahmen der Erfindung, dass der Separator als Umhüllung ausgebildet sein kann, wobei jede positive Elektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.

Eine Umhüllung der positiven Elektrode führt zu einer gleichmäßigeren Ionenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.

Figur 1: zeigt ein erstes Ausführungsbeispiel einer erfindungsgemäßen wiederaufladbaren Batteriezelle in einer Querschnittsdarstellung;

Figur 2: zeigt eine elektronenmikroskopische Aufnahme der dreidimensionalen porösen Struktur des Metallschaums des ersten Ausführungsbeispiels aus Figur 1 als Detaildarstellung;

Figur 3: zeigt ein zweites Ausführungsbeispiel einer erfindungsgemäßen wiederaufladbaren Batteriezelle in einer Querschnittsdarstellung;

Figur 4: zeigt ein Detail des zweiten Ausführungsbeispiels aus Figur 3;

Figur 5: zeigt ein drittes Ausführungsbeispiel der erfindungsgemäßen wiederaufladbaren Batteriezelle in einer Explosionsdarstellung;

Figur 6: zeigt den Potentialverlauf in Volt [V] während zwei Lade-/Entladezyklen als Funktion der prozentualen Ladung einer Test-Vollzelle mit metallischem Lithium als aktives Material der negativen Elektrode, wobei der Lade- und Entladestrom 0,1 mA/$cm^2$ beträgt;

Figur 7: zeigt den Potentialverlauf in Volt [V] während zwei Lade-/Entladezyklen als Funktion der prozentualen Ladung einer Test-Vollzelle mit metallischem Lithium als aktives Material der negativen Elektrode, wobei vor den zwei Lade-/Entladezyklen ein Initialisierungszyklus durchgeführt wurde und der Lade- und Entladestrom 0,1 mA/$cm^2$ beträgt;

Figur 8: zeigt den Potentialverlauf in Volt [V] während zwei Lade-/Entladezyklen als Funktion der prozentualen Ladung einer Test-Vollzelle mit metallischem Lithium als aktives Material der negativen Elektrode, wobei ein äußerer Druck an die Zelleangelegt wurde, vor den zwei Lade-/Entladezyklen ein Initialisierungszyklus durchgeführt wurde und der Lade- und Entladestrom 0,1 mA/$cm^2$ beträgt;

Figur 9: zeigt eine nach der Demontage der zweiten Test-Vollzelle aus Experiment 1 erhaltene negative Elektrode;

Figur 10: zeigt den Potentialverlauf in Volt [V] während zwei Lade-/Entladezyklen als Funktion der prozentualen Ladung einer Test-Vollzelle mit metallischem Lithium als aktives Material der negativen Elektrode, wobei vor den zwei Lade-/Entladezyklen ein Initialisierungszyklus durchgeführt wurde und der Lade- und Entladestrom 0,5 $mA/cm^2$ beträgt;

Figur 11: zeigt den Potentialverlauf in Volt [V] während zwei Lade-/Entladezyklen als Funktion der prozentualen Ladung einer Test-Vollzelle mit metallischem Lithium als aktives Material der negativen Elektrode, wobei vor den zwei Lade-/Entladezyklen ein Initialisierungszyklus durchgeführt wurde und der Lade- und Entladestrom 1,0 $mA/cm^2$ beträgt;

Figur 12: zeigt die Zykeleffizienz in % als Funktion der Zykelzahl einer Test-Vollzelle mit metallischem Lithium als aktives Material der negativen Elektrode, wobei der Lade- und Entladestrom 1,0 $mA/cm^2$ beträgt;

Figur 13: zeigt die Zykeleffizienzen in % als Funktion der Zykelzahl von drei Test-Vollzellen mit metallischem Lithium als aktives Material der negativen Elektrode, wobei zwei Test-Vollzellen Elektrolyt 1 und eine Test-Vollzelle Referenzelektrolyt enthielten;

Figur 14: zeigt die Leitfähigkeit in [mS/cm] des Elektrolyten 1 in Abhängigkeit der Konzentration der Verbindung 1;

Figur 15: zeigt die Leitfähigkeit in [mS/cm] des Elektrolyten 3 in Abhängigkeit der Konzentration von der Verbindung 3; und

Figur 16: zeigt die Leitfähigkeit in [mS/cm] des Elektrolyten 4 in Abhängigkeit der Konzentration von Verbindung 4.

Figur 1 zeigt ein erstes Ausführungsbeispiel einer erfindungsgemäßen wiederaufladbaren Batteriezelle 2 in Querschnittsdarstellung. Diese wiederaufladbare Batteriezelle 2 ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der wiederaufladbaren Batteriezelle 2 verbunden. Die wiederaufladbare Batteriezelle 2 ist derart mit einem auf $SO_2$-basierendenElektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel enthalten die positiven Elektroden 4 eine Interkalationsverbindung als aktives Material. Bei dieser Interkalationsverbindung handelt es sich um $LiCoMnO_4$.

Die Elektroden 4, 5 sind im vorliegenden Ausführungsbeispiel flächig ausgebildet, d.h. als Schichten mit einem im Verhältnis zu ihrer Flächenausdehnung geringeren Dicke. Sie sind jeweils durch Separatoren 11 voneinander getrennt. Das Gehäuse 1 der wiederaufladbaren Batteriezelle 2 ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind. Die wiederaufladbare Batteriezelle 2 kann jedoch auch als Wickelzelle ausgebildet sein, bei welcher die Elektroden aus dünnen Lagen bestehen, die zusammen mit einem Separatormaterial aufgewickelt sind. Die Separatoren 11 trennen einerseits die positive Elektrode 4 und die negative Elektrode 5 räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen.

Die Elektroden 4, 5 weisen weiterhin ein Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material (in Figur 1 nicht dargestellt). Das Ableitelement ist in Form eines porösen Metallschaums 18 ausgebildet. Der Metallschaum 18 erstreckt sich über die Dickendimension der Elektroden 4, 5. Das aktive Material der positiven Elektroden 4 und der negativen Elektroden 5 ist in die Poren dieses Metallschaums 18 eingearbeitet, sodass es dessen Poren über die gesamte Dicke der Metallstruktur gleichmäßig füllt. Zur Verbesserung der mechanischen Festigkeit enthalten die positiven Elektroden 4 ein Bindemittel. Bei diesem Bindemittel handelt es sich um ein Fluorpolymer. Die negativen Elektroden 5 enthalten als aktives Material Lithium. Figur 2 zeigt eine elektronenmikroskopische Aufnahme der dreidimensionalen porösen Struktur des

Metallschaums 18 des ersten Ausführungsbeispiels aus Figur 1. Anhand des angegebenen Maßstabes ist zu erkennen, dass die Poren P im Mittel einen Durchmesser von mehr als 100 $\mu$m haben, also verhältnismäßig groß sind. Bei diesem Metallschaum handelt es sich um einen Metallschaum aus Nickel.

Figur 3 zeigt ein zweites Ausführungsbeispiel einer erfindungsgemäßen wiederaufladbaren Batteriezelle 20 in Querschnittsdarstellung. Dieses zweite Ausführungsbeispiel unterscheidet sich von dem in Figur 1 gezeigten, ersten Ausführungsbeispiel dadurch, dass die Elektrodenanordnung eine positive Elektrode 23 und zwei negative Elektroden 22 umfasst. Sie sind jeweils durch Separatoren 21 voneinander getrennt und von einem Gehäuse 28 umgeben. Die positive Elektrode 23 weist ein Ableitelement 26 in Form einer planaren Metallfolie auf, auf welche das aktive Material 24 der positiven Elektrode 23 beidseitig aufgebracht ist. Die negativen Elektroden 22 umfassen ebenfalls ein Ableitelement 27 in Form einer planaren Metallfolie, auf welche das aktive Material 25 der negativen Elektrode 22 beidseitig aufgebracht ist. Alternativ können die planaren Ableitelemente der Randelektroden, also der Elektroden, die den Elektrodenstapel abschließen, nur einseitig mit aktivem Material beschichtetet sein. Die nicht-beschichtete Seite zeigt zur Gehäusewand. Die Elektroden 22, 23 sind über Elektrodenanschlüsse 29, 30 mit entsprechenden Anschlusskontakten 31, 32 der wiederaufladbaren Batteriezelle 20 verbunden.

Figur 4 zeigt die planare Metallfolie, welche jeweils als Ableitelement 26, 27 für die positive Elektroden 23 und die negativen Elektroden 22 im zweiten Ausführungsbeispiel aus Figur 3 dient. Diese Metallfolie weist eine durchbrochene bzw. netzartige Struktur mit einer Dicke von 20 $\mu$m auf.

Figur 5 zeigt ein drittes Ausführungsbeispiel einer erfindungsgemäßen wiederaufladbaren Batteriezelle 40 in Explosionsdarstellung. Dieses dritte Ausführungsbeispiel unterscheidet sich von den beiden zuvor erläuterten Ausführungsbeispielen dadurch, dass die positive Elektrode 44 von einer Umhüllung 13 umhüllt ist. Dabei ist eine Flächenausdehnung der Umhüllung 13 größer als eine Flächenausdehnung der positiven Elektrode 44, deren Begrenzung 14 in Figur 5 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

Beispiel 1: Herstellung eines Referenzelektrolyten

Ein für die nachfolgend beschriebenen Beispiele verwendeter Referenzelektrolyt wurde nach dem in der Patentschrift EP 2 954 588 B1 (im Nachfolgenden bezeichnet als [V8]) beschriebenen Verfahren hergestellt. Zunächst wurde Lithiumchlorid (LiCl) unter Vakuum bei 120 °C für drei Tage getrocknet. Aluminiumpartikel (Al) wurden unter Vakuum für zwei Tage bei 450 °C getrocknet. LiCl, Aluminiumchlorid ($AlCl_3$) und Al wurden in einem Molverhältnis $AlCl_3$:LiCl:Al von 1:1,06:0,35 in einer Glasflasche mit einer Öffnung, die den Austritt von Gas ermöglicht, miteinander vermischt. Daraufhin wurde diese Mischung stufenweise zur Herstellung einer Salzschmelze wärmebehandelt. Nach dem Abkühlen wurde die gebildete Salzschmelze gefiltert, danach auf Raumtemperatur abgekühlt und letztlich $SO_2$ zugeführt bis das gewünschte molare Verhältnis von $SO_2$ zu $LiAlCl_4$ gebildet wurde. Der so gebildete Referenzelektrolyt hatte die Zusammensetzung $LiAlCl_4 * \times SO_2$, wobei x abhängig von der zugeführten Menge an $SO_2$ ist.

Beispiel 2: Herstellung von vier Ausführungsbeispielen 1, 2, 3 und 4 eines auf $SO_2$-basierenden Elektrolyten für eine Batteriezelle

Für die nachfolgend beschriebenen Experimente wurden vier Ausführungsbeispiele 1, 2, 3 und 4 des auf $SO_2$-basierenden Elektrolyten hergestellt (nachfolgend bezeichnet als Elektrolyte 1, 2, 3 und 4). Hierfür wurden zunächst vier unterschiedliche erste Leitsalze nach Formel (I) gemäß einem in den folgenden Dokumenten [V9], [V10] und [V11] beschriebenen Herstellungsverfahren hergestellt:

[V9] "I. Krossing, Chem. Eur. J. 2001, 7, 490;
[V10] S. M. Ivanova et al., Chem. Eur. J. 2001, 7, 503;
[V11] Tsujioka et al., J. Electrochem. Soc., 2004, 151, A1418"

Diese vier unterschiedlichen, ersten Leitsalze nach Formel (I) werden nachfolgend als Verbindungen 1, 2, 3 und 4 bezeichnet. Sie stammen aus der Familie der Polyfluoroalkoxyaluminate und wurden gemäß folgender Reaktionsgleichung ausgehend von $LiAlH_4$ und dem entsprechenden Alkohol R-OH mit $R^1=R^2=R^3=R^4$ in Hexan hergestellt.

$$LiAlH_4 + 4\ HO\text{-}R \xrightarrow{\text{Hexan}} LiAl(OR)_4 + 4\ H_2$$

Hierdurch wurden die nachfolgend darstellten Verbindungen 1, 2, 3 und 4 mit den Summen- bzw. Strukturformeln

gebildet:

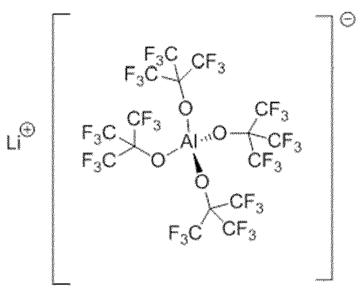

Li $[Al(OC(CF_3)_3)_4]$
Verbindung 1

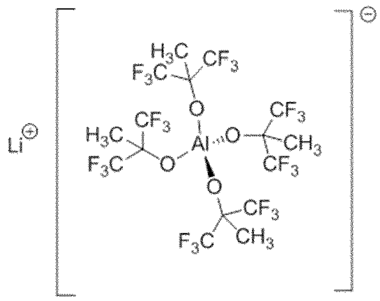

Li $[Al(OC(CH_3)(CF_3)_2)_4]$
Verbindung 2

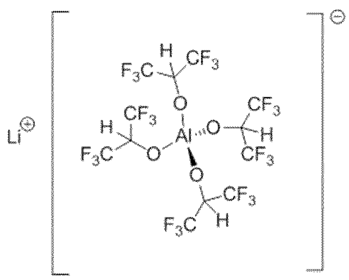

Li $[Al(OCH(CF_3)_2)_4]$
Verbindung 3

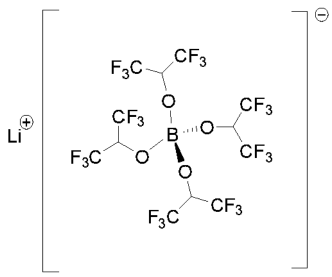

$Li[B(OCH(CF_3)_2)_4]$
Verbindung 4

Zur Aufreinigung wurden die Verbindungen 1, 2, 3 und 4 zunächst umkristallisiert. Hierdurch wurden Reste des Edukts $LiAlH_4$ aus dem ersten Leitsalz entfernt, da dieses Edukt möglicherweise mit eventuell vorhandenen Wasserspuren in $SO_2$ zur Funkenbildung führen könnte.

Danach erfolgte die Lösung der Verbindungen 1, 2, 3 und 4 in $SO_2$. Hierbei wurde herausgefunden, dass sich die Verbindungen 1, 2, 3 und 4 in $SO_2$ gut lösen.

Die Herstellung der Elektrolyte 1, 2, 3 und 4 wurde bei Tieftemperatur oder unter Druck gemäß den nachfolgend aufgelisteten Verfahrensschritten 1 bis 4 durchgeführt:

1) Vorlage der jeweiligen Verbindung 1, 2, 3 und 4 in jeweils einem Druckkolben mit Steigrohr,
2) Evakuieren der Druckkolben,
3) Einströmen von flüssigem $SO_2$ und
4) Wiederholung der Schritte 2 + 3 bis die Zielmenge an $SO_2$ zugegeben worden ist.

Die jeweilige Konzentration der Verbindungen 1, 2, 3 und 4 in den Elektrolyten 1, 2, 3 und 4 betrug 0,6 mol/l (Stoffmengenkonzentration bezogen auf 1 Liter des Elektrolyten), sofern in der Experimentbeschreibung nichts Anderes beschrieben ist. Mit den Elektrolyten 1, 2, 3 und 4 und dem Referenzelektrolyten wurden die nachfolgend beschriebenen Experimente durchgeführt.

Beispiel 3: Herstellung von Test-Vollzellen

Die in den nachfolgend beschriebenen Experimenten verwendeten Test-Vollzellen sind wiederaufladbare Batteriezellen mit zwei negativen Elektroden und einer positiven Elektrode, welche jeweils durch einen Separator getrennt waren. Die positiven Elektroden wiesen ein aktives Material, einen Leitfähigkeitsvermittler und ein Bindemittel auf. Das aktive Material der positiven Elektrode ist im jeweiligen Experiment benannt. Die negativen Elektroden enthielten metallisches Lithium als aktives Material, welches auf dem Ableitelement der negativen Elektrode abgeschieden wurde bzw. schon vorhanden war. Das Ableitelement der positiven und der negativen Elektrode bestand aus Nickel. Die Test-Vollzellen wurden jeweils mit dem für die Experimente benötigten Elektrolyten, d. h. entweder mit dem Referenzelektrolyten oder den Elektrolyten 1, 2, 3 oder 4 befüllt.

Für jedes Experiment wurden mehrere, d.h. zwei bis vier identische Test-Vollzellen hergestellt. Die in den Experimenten vorgestellten Ergebnisse sind jeweils Mittelwerte aus den für die identischen Test- Test-Vollzellen erhaltenen Messwerte.

Beispiel 4: Messung in Test-Vollzellen

Deckschichtkapazität:
Die im ersten Zyklus verbrauchte Kapazität für die Bildung einer Deckschicht auf der negativen Elektrode ist ein wichtiges Kriterium für die Qualität einer Batteriezelle. Diese Deckschicht wird beim ersten Laden der Test-Vollzelle auf der negativen Elektrode gebildet. Für diese Deckschichtbildung werden Lithiumionen irreversibel verbraucht (Deckschichtkapazität), sodass der Test-Vollzelle weniger zykelbare Kapazität für die Folgezyklen zur Verfügung steht. Die Deckschichtkapazität in % der Theorie, die zur Bildung der Deckschicht auf der negativen Elektrode verbraucht wurde, berechnet sich gemäß nachfolgend genannter Formel:

$$\text{Deckschichtkapazität [in \% der Theorie]} = (Q_{lad}\ (x\ mAh) - Q_{ent}\ (y\ mAh)) / Q_{NEL}$$

Bei $Q_{lad}$ beschreibt die im jeweiligen Experiment vorgegebene Ladungsmenge in mAh; $Q_{ent}$ beschreibt diejenige Ladungsmenge in mAh, die beim anschließenden Entladen der Test-Vollzelle erhalten wurde. Bei $Q_{NEL}$ handelt es sich um die theoretische Kapazität der verwendeten negativen Elektrode. Die theoretische Kapazität berechnet sich z.B. im Fall von Graphit auf einen Wert von 372 mAh/g. Die Nennkapazität wird erhalten, indem von der theoretischen Kapazität der positiven Elektrode die Deckschichtkapazität (=$Q_{lad}$ (x mAh) - $Q_{ent}$ (y mAh)) subtrahiert wird.

Entladekapazität:

Bei Messungen in Test-Vollzellen wird z.B. die Entladekapazität über die Zykelzahl bestimmt werden. Dazu werden die Test-Vollzellen mit einer bestimmten Ladestromstärke bis zu einem bestimmten oberen Potential geladen. Das entsprechende obere Potential wird so lange gehalten, bis der Ladestrom auf einen bestimmten Wert abgesunken ist. Danach erfolgt die Entladung mit einer bestimmten Entladestromstärke bis zu einem bestimmten Entladepotential. Bei dieser Lademethode spricht man von einer I/U-Ladung. Dieser Vorgang wird je nach gewünschter Zykelzahl wiederholt.

Die oberen Potentiale bzw. das Entladepotential und die jeweiligen Lade- bzw. Entladestromstärken sind in den Experimenten benannt. Auch der Wert, auf den der Ladestrom abgesunken sein muss, ist in den Experimenten beschrieben.

Der Begriff "oberes Potential" wird Synonym zu den Begriffen "Ladepotential" "Ladespannung", Ladeschlussspannung" und "obere Potentialgrenze" verwendet. Die Begriffe bezeichnen die Spannung/ das Potential, bis zu welchem eine Zelle oder Batterie mit Hilfe einer Batterieladevorrichtung geladen wird.

Bevorzugt erfolgt die Ladung der Batterie mit einer Stromrate von C/2 und bei einer Temperatur von 22°C. Mit einer Lade- bzw. Entladerate von 1C wird definitionsgemäß die Nennkapazität einer Zelle in einer Stunde ge- bzw. entladen. Eine Laderate von C/2 bedeutet demnach eine Ladezeit von 2 Stunden.

Der Begriff "Entladepotential" wird Synonym zum Begriff "untere Zellspannung" verwendet. Damit wird die Spannung/ das Potential bezeichnet, bis zu welchem eine Zelle oder Batterie mit Hilfe einer Batterieladevorrichtung entladen wird.

Bevorzugt erfolgt die Entladung der Batterie mit einer Stromrate von C/2 und bei einer Temperatur von 22°C.

Die Entladekapazität wird aus dem Entladestrom und der Zeit, bis die Kriterien zur Beendigung der Entladung erfüllt sind, erhalten. Die dazugehörigen

Figuren zeigen Mittelwerte für die Entladekapazitäten als Funktion der Zykelzahl. Diese Mittelwerte der Entladekapazitäten werden jeweils in Prozent der Nennkapazität ausgedrückt.

Das Verhältnis aus der Entladekapazität $Q_{ent}$ und der Ladekapazität $Q_{lad}$ ergibt die Zykeleffizienz $Z = Q_{ent}/Q_{lad}$. Die Ladekapazität ist durch die Ladeparametern vorgegeben. Die Entladekapazität wird, wie oben beschrieben, für jeden Zyklus ermittelt.

Experiment 1: Zykeln von Test-Vollzellen mit einer Lade- und Entladestromstärke von 0,1 $mA/cm^2$

Mit metallischem Lithium als aktives Material der negativen Elektrode wurden drei verschiedene Experimente in Test-Vollzellen gemäß Beispiel 3 durchgeführt. Die drei Test-Vollzellen wurden mit dem in Beispiel 2 beschriebenen Elektrolyten 1 befüllt. Die positiven Elektroden hatten Lithiumnickelmangancobaltoxid als aktives Material. Es wurden zwei Lade-Entlade-Zyklen durchgeführt und die Entladekapazitäten bestimmt. Mit der ersten Test-Vollzelle wurden direkt

zwei Lade-/ Entlade-Zyklen durchgeführt. Mit der zweiten Test-Vollzelle wurde vor den zwei Lade-/ Entlade-Zyklen ein Initialisierungszyklus durchgeführt. Dabei wurde metallisches Lithium für 3 min mit 12mA und weiter bis zum Ende der Ladung mit 0,1 mA/cm$^2$ abgeschieden. Anschließend erfolgte eine Entladung. Danach starteten die zwei Lade-/ Entlade-Zyklen. Mit der dritten Test-Vollzelle wurde der Einfluss von äußerem Druck untersucht. Das Gehäuse der Test-Vollzelle wurde dazu von außen definiert mit einem Druck von ca. 50 N/cm$^2$ zusammengepresst. Dann wurde ein Initialisierungszyklus, wie bei der zweiten Test-Vollzelle beschrieben, und anschließend zwei Lade-/ Entlade-Zyklen durchgeführt. Das Laden der Test-Vollzellen erfolgte mit einem Strom von 0,1 mA/cm$^2$ bis zu einem Potential von 4,4 Volt und bis eine Ladekapazität von 8 mAh/cm$^2$ erreicht war. Danach erfolgte die Entladung mit einem Strom von 0,1 mA/cm$^2$ bis zum Erreichen eines Potentials von 2,9 Volt.

Die Figuren 6, 7 und 8 zeigen jeweils das Potenzial in Volt der drei Test-Vollzellen beim Laden und Entladen als Funktion der Ladung in %, die bezogen ist auf die maximale Ladung. In den Figuren sind ebenfalls zu jeder Test-Vollzelle die Zykeleffizienzen der gezeigten zwei Zyklen dargestellt.

Alle drei Test-Vollzellen zeigen einen ähnlichen Potentialverlauf in Zyklus 1 und Zyklus 2. Die Zykeleffizienzen liegen bei allen Test-Vollzellen über 90% und sind etwas besser bei den Test-Vollzellen, bei denen ein Initialisierungszyklus durchgeführt wurde.

Experiment 2: Morphologie der Lithiumabscheidung

Zur Bestimmung der Morphologie des abgeschiedenen metallischen Lithiums wurde die zweite Test-Vollzelle aus Experiment 1 nach einigen Zyklen demontiert. Figur 9 zeigt diese negative Elektrode, bei der eine homogene und kompakte Lithiumabscheidung zu erkennen ist. Es sind keine punktuellen Lithiumabscheidungen erkennbar, sondern die vollständige Elektrode ist gleichmäßig bedeckt. Diese vorteilhafte Abscheidung von Lithium weist auf eine gute Zykelstabilität von Lithium in dem verwendeten Elektrolyten 1 hin.

Experiment 3: Zykeln von Test-Vollzellen mit einer Lade- und Entladestromstärke von 0,5 mA/cm$^2$ und 1,0 mA/cm$^2$

Um das Laden und Entladen mit höheren Strömen zu untersuchen wurden zwei weitere Test-Vollzellen, wie in Experiment 1 beschrieben, hergestellt. Mit der ersten Test-Vollzelle wurden zwei Lade-/ Entlade-Zyklen mit einem Lade- bzw. Entladestrom von 0,5 mA/cm$^2$ durchgeführt. Bei der zweiten Test-Vollzelle betrug der Lade- bzw. Entladestrom betrug 1,0 mA/cm$^2$. Diese Zelle wurden 21-mal ge- bzw. entladen. Bei beiden Test-Vollzellen wurde vor den Lade-/ Entlade-Zyklen ein Initialisierungszyklus durchgeführt. Das Laden der Test-Vollzellen erfolgte mit einem Strom von 0,5 mA/cm$^2$ bzw. 1,0 mA/cm$^2$ bis zu einem Potential von 4,4 Volt und bis eine Ladekapazität von 8 mAh/cm$^2$ erreicht war. Danach erfolgte die Entladung mit einem Strom von 0,5 mA/cm$^2$ bzw. 1,0 mA/cm$^2$ bis zum Erreichen eines Potentials von 2,9 Volt.

Die Figuren 10 und 11 zeigen jeweils das Potenzial in Volt der zwei Test-Vollzellen beim Laden und Entladen als Funktion der Ladung in %, die bezogen ist auf die maximale Ladung. In den Figuren 10 und 11 sind ebenfalls zu jeder Test-Vollzelle die Zykeleffizienzen der gezeigten zwei Zyklen dargestellt. Beide Test-Vollzellen zeigen einen ähnlichen Potentialverlauf in Zyklus 1 und Zyklus 2. Die Zykeleffizienzen liegen bei beiden Test-Vollzellen über 97% und sind etwas besser bei der Test-Vollzelle, die mit einer Stromstärke von 1 mA/cm$^2$ betrieben wurde. Mit dieser Test-Vollzelle (1 mA/cm$^2$) wurden weitere Zyklen durchgeführt. Figur 12 zeigt die Zykeleffizienz in % als Funktion der Zyklenzahl. Die Zykeleffizienz zeigt einen stabilen Verlauf und in Zyklus 21 werden noch ca. 95% erreicht.

Experiment 4: Zykeleffizienzen von Test-Vollzellen mit dem Elektrolyt 1 im Vergleich zu Test-Vollzellen mit Referenzelektrolyt

Um die Zykeleffizienzen von Test-Vollzellen mit Elektrolyt 1 mit einer Test-Vollzelle mit Referenzelektrolyt zu vergleichen, wurden zunächst Test-Vollzellen mit Referenzelektrolyt hergestellt. Die Test-Vollzellen enthielten Lithiumeisenphosphat als aktives Material der positiven Elektrode und metallisches Lithium als aktives Material der negativen Elektrode. Die Test-Vollzelle enthielt einen Referenzelektrolyten der Zusammensetzung $LiAlCl_4$x $6SO_2$.

Um einer Korrosion von Lithium, d.h. den Verlust von zykelbarem Lithium in diesem Elektrolyten vorzubeugen, wurden schnelle Lade- und Entladeraten von 7,5 mAh/cm$^2$ gewählt. Die Test-Vollzellen wurden mit dieser Rate bis zu einem Potential von 3,6 V geladen und anschließend bis zu einem Potential von 2,5 V entladen.

Zum Vergleich wurden die zweite Test-Vollzelle aus Experiment 1 (Lade-/ Entladestrom 0,1 mA/cm$^2$) und die zweite Testvollzelle aus Experiment 3 (Lade-/ Entladestrom 1mA/cm$^2$) verwendet, die beide den Elektrolyten 1 enthielten.

Figur 13 zeigt die Zykeleffizienzen in % als Funktion der Zyklenzahl der ersten vier Lade-/ Entladezyklen der Test-Vollzelle mit einem Lade-/ Entladestrom von 0,1mA/cm$^2$, die ersten sieben Lade-/ Entladezyklen der Test-Vollzelle mit einem Lade-/ Entladestrom von 1mA/cm$^2$ und die ersten sieben Lade-/ Entladezyklen der Test-Vollzelle mit dem Referenzelektrolyten. Die Zykeleffizienzen der Test-Vollzellen mit Elektrolyt 1 zeigen einen sehr stabilen Verlauf. Die

erste Test-Vollzelle erreicht nach vier Zyklen eine Zykeleffizienz von 98% die zweite Test-Vollzelle nach sieben Zyklen eine Zykeleffizienz von 92%. Die TestVollzelle mit Referenzelektrolyt zeigt ein wesentlich schlechteres Verhalten. Sie erreicht in Zyklus 7 eine Zykeleffizienz von nur noch ca. 68%.

Experiment 5: Bestimmung von Leitfähigkeiten der Elektrolyte 1, 3 und 4

Zur Bestimmung der Leitfähigkeit wurde der Elektrolyte 1, 3 und 4 mit verschiedenen Konzentrationen der Verbindungen 1, 3 und 4 hergestellt. Für jede Konzentration der verschiedenen Verbindungen wurden die Leitfähigkeiten der Elektrolyten bestimmt, indem ein konduktives Messverfahren verwendet wurde. Dabei wurde nach Temperierung ein Zweielektrodensensor berührend in die Lösung gehalten und in einem Messbereich von 0 - 50 mS/cm gemessen. Bei den Messungen wurde beachtet, dass der Sensor mit der $SO_2$-haltigen Elektrolytlösung reagieren kann.

Figur 14 zeigt die Leitfähigkeit des Elektrolyten 1 in Abhängigkeit der Konzentration der Verbindung 1. Zu sehen ist ein Maximum der Leitfähigkeit bei einer Konzentration der Verbindung 1 von 0,6 mol/L - 0,7 mol/L mit einem Wert von ca. 37,9 mS/cm. Im Vergleich dazu haben die aus dem Stand der Technik bekannten, organischen Elektrolyten, wie z.B. LP30 (1 M LiPF6 / EC-DMC (1:1Gew.)) eine Leitfähigkeit von nur ca. 10 mS/cm.

Die Figuren 15 (Elektrolyt 3) und 16 (Elektrolyt 4) zeigen die zu der verschiedenen Konzentration ermittelten Leitfähigkeitswerte von Elektrolyt 3 und Elektrolyt 4. Bei Elektrolyt 4 werden maximal 18 mS/cm bei einer Leitsalzkonzentration von 1 mol/L erreicht. Elektrolyt 3 zeigt seine höchste Leitfähigkeit von 0,5 mS/cm bei einer Leitsalzkonzentration von 0,6 mol/L. Obwohl Elektrolyt 3 eine geringere Leitfähigkeit zeigt, ist, wie in Experiment 4, eine Ladung bzw. Entladung einer Test-Vollzelle gut möglich.

**Patentansprüche**

**1.** Wiederaufladbare Batteriezelle (2, 20, 40), enthaltend ein aktives Metall, zumindest eine positive Elektrode (4, 23, 44) mit einem Ableitelement (26), zumindest eine negative Elektrode (5, 22, 45) mit einem Ableitelement (27), ein Gehäuse (1, 28) und einen Elektrolyten,

wobei die negative Elektrode (5, 22, 45) zumindest im geladenen Zustand derwiederaufladbaren Batteriezelle metallisches Lithium als aktives Material enthält und wobei der Elektrolyt auf $SO_2$ basiert und zumindest ein erstes Leitsalz enthält, welches die Formel (I)

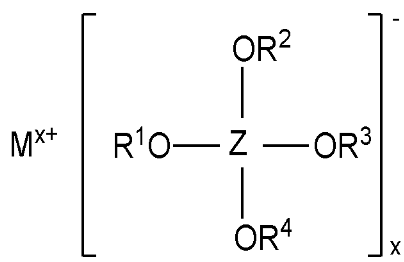

Formel (I)

aufweist, wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$, $R^2$, $R^3$ und $R^4$ unabhängig voneinander ausge- wählt sind aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl; und
- wobei Z Aluminium oder Bor ist.

**2.** Wiederaufladbare Batteriezelle (2, 20, 40) nach Anspruch 1,
bei welcher das metallische Lithium beim Laden der wiederaufladbaren Batteriezelle auf dem Ableitelement (27) der negativen Elektrode (5, 22, 45) abscheidbar ist.

**3.** Wiederaufladbare Batteriezelle (2, 20, 40) nach Anspruch 1 oder 2,

bei welcher sich das metallische Lithium im geladenen Zustand der wiederaufladbaren Batteriezelle auf dem Ableitelement (27) der negativen Elektrode (5, 22, 45) befindet.

**4.** Wiederaufladbare Batteriezelle (2, 20, 40) nach einem der Ansprüche 1 bis 3,
bei welcher sich das metallische Lithium schon vor dem ersten Laden der wiederaufladbaren Batteriezelle auf dem Ableitelement (27) der negativen Elektrode (5, 22, 45) befindet.

**5.** Wiederaufladbare Batteriezelle (2, 20, 40) nach einem der vorhergehenden Ansprüche,
bei welcher (5, 22, 45) das Ableitelement (27) der negativen Elektrode (5, 22, 45)

- entweder planar in Form eines Metallblechs oder einer Metallfolie oder
- dreidimensional in Form einer porösen Metallstruktur, insbesondere in Form eines Metallschaums (18)

ausgebildet ist.

**6.** Wiederaufladbare Batteriezelle (2, 20, 40) nach einem der vorhergehenden Ansprüche,
bei welcher das Ableitelement (27) der negativen Elektrode (5, 22, 45) zumindest teilweise aus einem lithiumspeichernden Material ausgebildet ist, das ausgewählt ist aus der Gruppe, die gebildet wird von

- Kohlenstoff, insbesondere in der Modifikation Graphit,
- einem mit Lithium-Legierungsbildenden Material,
- einem Lithium-Interkalations-Material, welches keinen Kohlenstoff enthält, insbesondere Lithium-Titanat (z.B. $Li_4Ti_5O_{12}$), und
- einem Konversions-Material, insbesondere ein Übergangsmetalloxid.

**7.** Wiederaufladbare Batteriezelle (2, 20, 40) nach Anspruch 6,
bei welcher das Lithium-Legierungsbildende Material ausgewählt ist

- aus der Gruppe, die gebildet wird von Lithium-speichernden Metallen und Metalllegierungen, vorzugsweise Si, Ge, Sn, $SnCo_xC_y$ oder $SnSi_x$, oder
- aus der Gruppe, die gebildet wird von Oxiden der Lithium-speichernden Metallen und Metalllegierungen, vorzugsweise $SnO_x$, $SiO_x$, oxidische Gläser von Sn und Si.

**8.** Wiederaufladbare Batteriezelle (2, 20, 40) nach einem der vorhergehenden Ansprüche,
bei welcher die positive Elektrode (4, 23, 44) als aktives Material zumindest eine Verbindung enthält, die vorzugsweise die Zusammensetzung $Li_xM'_yM''_zO_a$ aufweist, worin

- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der 2, 3, 4, 5, 6, 7, 8, 9, 10, 11, 12, 13, 14, 15 und 16 des Periodensystems der Elemente;
- x und y unabhängig voneinander Zahlen größer 0 sind;
- z eine Zahl größer oder gleich 0 ist; und
- a eine Zahl größer 0 ist.

**9.** Wiederaufladbare Batteriezelle (2, 20, 40) nach Anspruch 8,

bei welcher die Verbindung die Zusammensetzung $Li_xM'_yM''_zO_a$ aufweist, in welcher M' Mangan und M" Cobalt sind, und
wobei vorzugsweise x, y und z gleich 1 und a gleich 4 ist.

**10.** Wiederaufladbare Batteriezelle (2, 20, 40) nach Anspruch 8 oder 9,
bei welcher die Verbindung die Zusammensetzung $Li_xM'_yM''_zO_a$ aufweist, in welcher M' Nickel und Mangan umfasst und M" Kobalt ist und die Formel $Li_xNi_{yi}Mn_{y2}Co_zO_a$ aufweist, wobei y1 und y2 unabhängig voneinander Zahlen größer 0 sind.

**11.** Wiederaufladbare Batteriezelle (2, 20, 40) nach Anspruch 8,
bei welcher die Verbindung die Zusammensetzung $Li_xM'_yM''^1_{z1}M''^2_{z2}O_4$ aufweist, worin $M''^1$ mindestens ein Element

ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente, M"$^2$ Phosphor ist, z1 eine Zahl größer oder gleich 0 ist und z2 den Wert 1 hat.

**12.** Wiederaufladbare Batteriezelle (2, 20, 40) nach Anspruch 11,
bei welcher die Verbindung die Zusammensetzung $Li,M'_yM''^{1}_{z1}PO_4$ aufweist, in welcher M' Eisen und M"$^1$ Mangan ist, wobei die Verbindung bevorzugt die Zusammensetzung $Li(Fe_{0.3}Mn_{0.7})PO_4$ aufweist.

**13.** Wiederaufladbare Batteriezelle (2, 20, 40) nach einem der vorhergehenden Ansprüche,
bei welchem die Substituenten $R^1$, $R^2$, $R^3$ und $R^4$ des ersten Leitsalzes unabhängig voneinander ausgewählt sind aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

**14.** Wiederaufladbare Batteriezelle (2, 20, 40) nach einem der vorhergehenden Ansprüche,
bei welchem zumindest einer der Substituenten $R^1$, $R^2$, $R^3$ und $R^4$ des ersten Leitsalzes durch mindestens ein Fluoratom und/oder durch mindestens eine chemische Gruppe substituiert ist, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl.

**15.** Wiederaufladbare Batteriezelle (2, 20, 40) nach einem der vorhergehenden Ansprüche,
bei welchem zumindest einer der Substituenten $R^1$, $R^2$, $R^3$ und $R^4$ des ersten Leitsalzes eine $CF_3$-Gruppe oder eine $OSO_2CF_3$-Gruppe ist.

**16.** Wiederaufladbare Batteriezelle (2, 20, 40) nach einem der vorhergehenden Ansprüche,
bei welchem das erste Leitsalz ausgewählt ist aus der Gruppe, die gebildet wird von

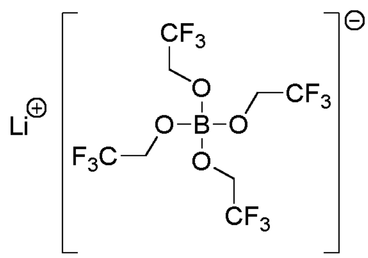

$Li[B(OCH_2CF_3)_4]$

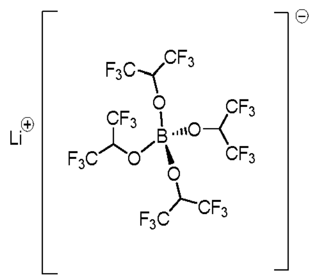

$Li[B(OCH(CF_3)_2)_4]$

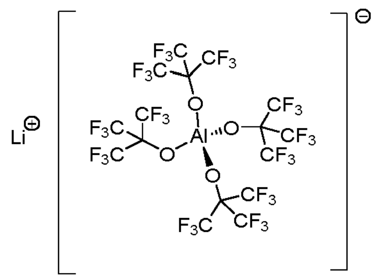

$Li[Al(OC(CF_3)_3)_4]$

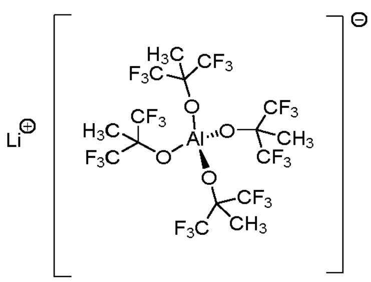

$Li[Al(OC(CH_3)(CF_3)_2)_4]$

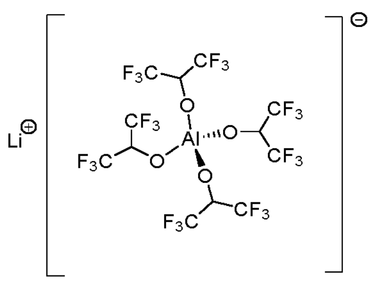

$Li[Al(OCH(CF_3)_2)_4]$.

**17.** Wiederaufladbare Batteriezelle (2, 20, 40) nach einem der vorhergehenden Ansprüche,
wobei der Elektrolyt mindestens ein zweites, von dem ersten Leitsalz nach Formel (I) abweichendes Leitsalz enthält.

**18.** Wiederaufladbare Batteriezelle (2, 20, 40) nach Anspruch 17, bei welcher das zweite Leitsalz des Elektrolyten eine Alkalimetallverbindung, insbesondere eine Lithiumverbindung ist, die ausgewählt ist aus der Gruppe, die gebildet wird von einem Aluminat, einem Halogenid, einem Oxalat, einem Borat, einem Phosphat, einem Arsenat und einem Gallat.

**19.** Wiederaufladbare Batteriezelle (2, 20, 40) nach Anspruch 17 oder 18, bei welcher das zweite Leitsalz des Elektrolyten ein Lithiumtetrahalogenoaluminat, insbesondere Lithiumtetrachloroaluminat ist.

**20.** Wiederaufladbare Batteriezelle (2, 20, 40) nach einem der vorhergehenden Ansprüche, bei welcher der Elektrolyt mindestens ein Additiv enthält.

**21.** Wiederaufladbare Batteriezelle (2, 20, 40) nach Anspruch 20, bei welcher das Additiv des Elektrolyten ausgewählt ist aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluoro(oxalato)borat, Lithiumtetrafluoro(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 ° C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

**22.** Wiederaufladbare Batteriezelle (2, 20, 40) nach einem der vorhergehenden Ansprüche, bei welcher der Elektrolyt die Zusammensetzung

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs,

bezogen auf das Gesamtgewicht der Elektrolytzusammensetzung aufweist.

**23.** Wiederaufladbare Batteriezelle (2, 20, 40) nach einem der vorhergehenden Ansprüche, bei welcher die Stoffmengenkonzentration des ersten Leitsalzes im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten ist.

**24.** Wiederaufladbare Batteriezelle (2, 20, 40) nach einem der vorhergehenden Ansprüche, bei welcher der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält.

**25.** Wiederaufladbare Batteriezelle (2, 20, 40) nach einem der vorhergehenden Ansprüche, bei welcher die positive Elektrode (4, 23, 44) zumindest eine Metallverbindung enthält, die ausgewählt ist aus der Gruppe, die gebildet wird von einem Metalloxid, einem Metallhalogenid und einem Metallphosphat, wobei das Metall der Metallverbindung vorzugsweise ein Übergangsmetall der Ordnungszahlen 22 bis 28 des Periodensystems der Elemente, insbesondere Kobalt, Nickel, Mangan oder Eisen ist.

**26.** Wiederaufladbare Batteriezelle (2, 20, 40) nach einem der vorhergehenden Ansprüche, bei welcher die positive Elektrode (4, 23, 44) zumindest eine Metallverbindung enthält, die die chemische Struktur eines Spinells, eines Schichtoxids, einer Umwandlungsverbindung oder einer Polyanionischen Verbindung hat.

**27.** Wiederaufladbare Batteriezelle (2, 20, 40) nach einem der vorhergehenden Ansprüche, bei welcher die positive Elektrode (4, 23, 44) ein Ableitelement (34) aufweist, das vorzugsweise

- entweder planar in Form eines Metallblechs oder einer Metallfolie oder
- dreidimensional in Form einer porösen Metallstruktur, insbesondere in Form eines Metallschaums (18)

ausgebildet ist.

**28.** Wiederaufladbare Batteriezelle (2, 20, 40) nach einem der vorhergehenden Ansprüche,
bei welcher die positive Elektrode (4, 23, 44) und/oder die negative Elektrode (5) zumindest ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, oder

ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist, oder
ein Bindemittel, welches aus einem Polymer besteht, das auf monomeren Styrolund Butadien-Struktureinheiten basiert, oder ein Bindemittel aus der Gruppe der Carboxymethylcellulosen enthält,
wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vorliegt.

**29.** Wiederaufladbare Batteriezelle (2, 20, 40) nach einem der vorhergehenden Ansprüche,
welche mehrere negativen Elektroden (5, 22, 45) und mehrere positive Elektroden (4, 23, 44) umfasst, die alternierend gestapelt in dem Gehäuse (1, 28) angeordnet sind, wobei die positiven Elektroden und die negativen Elektroden (5, 22, 45) vorzugsweise jeweils durch Separatoren (11, 13, 21) voneinander elektrisch getrennt sind.

## Claims

**1.** A rechargeable battery cell (2, 20, 40) comprising an active metal, at least one positive electrode (4, 23, 44) having a discharge element (26), at least one negative electrode (5, 22, 45) having a discharge element (27), a housing (1, 28) and an electrolyte,

the negative electrode (5, 22, 45) comprising metallic lithium as an active material at least in the charged state of the rechargeable battery cell,
and the electrolyte being based on $SO_2$ and comprising at least one first conducting salt which has the formula (I),

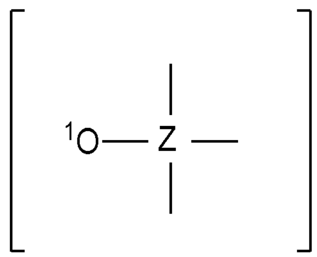

Formula (I)

- M being a metal selected from the group formed by alkali metals, alkaline earth metals, metals of group 12 of the periodic table of the elements, and aluminum;
- x being an integer from 1 to 3;
- the substituents $R^1$, $R^2$, $R^3$ and $R^4$ being selected independently of one another from the group formed by $C_1$-$C_{10}$ alkyl, $C_2$-$C_{10}$ alkenyl, $C_2$-$C_{10}$ alkynyl, $C_3$-$C_{10}$ cycloalkyl, $C_6$-$C_{14}$ aryl and $C_5$-$C_{14}$ heteroaryl; and
- Z being aluminum or boron.

**2.** The rechargeable battery cell (2, 20, 40) according to claim 1,
in which the metallic lithium is depositable on the discharge element (27) of the negative electrode (5, 22, 45) when the rechargeable battery cell is being charged.

**3.** The rechargeable battery cell (2, 20, 40) according to claim 1 or 2, in which the metallic lithium is located on the discharge element (27) of the negative electrode (5, 22, 45) in the charged state of the rechargeable battery cell.

**4.** The rechargeable battery cell (2, 20, 40) according to any of claims 1 to 3, in which the metallic lithium is already located on the discharge element (27) of the negative electrode (5, 22, 45) before the first charging of the rechargeable battery cell occurs.

**5.** The rechargeable battery cell (2, 20, 40) according to any one of the preceding claims, in which the discharge element (27) of the negative electrode (5, 22, 45) is designed

- either planar in the form of a metal sheet or a metal foil, or
- three-dimensional in the form of a porous metal structure, in particular in the form of a metal foam (18).

**6.** The rechargeable battery cell (2, 20, 40) according to any one of the preceding claims, in which the discharge element (27) of the negative electrode (5, 22, 45) is formed at least partially from a lithium-storing material selected from the group formed by

- carbon, in particular in the form of the carbon allotrope graphite,
- a material which forms an alloy with lithium,
- a lithium intercalation material that does not comprise carbon, in particular lithium titanate (for example, $Li_4Ti_5O_{12}$), and
- a conversion material, in particular a transition metal oxide.

**7.** The rechargeable battery cell (2, 20, 40) according to claim 6, in which the material which forms an active alloy with lithium is selected

- from the group formed by lithium-storing metals and metal alloys, preferably Si, Ge, Sn, $SnCo_xC_y$ and $SnSi_x$, or
- from the group formed by oxides of lithium-storing metals and metal alloys, preferably $SnO_x$, $SiO_x$ and oxidic glasses of Sn and Si.

**8.** The rechargeable battery cell (2, 20, 40) according to any one of the preceding claims, in which the positive electrode (4, 23, 44) comprises as active material at least one compound, which preferably has the composition $Li_xM'_yM''_zO_a$, wherein

- M' is at least one metal selected from the group formed by the elements Ti, V, Cr, Mn, Fe, Co, Ni, Cu and Zn;
- M" is at least one element selected from the group formed by the elements of groups 2, 3, 4, 5, 6, 7, 8, 9, 10, 11, 12, 13, 14, 15 and 16 of the periodic table of the elements;
- x and y independently of one another are numbers greater than 0;
- z is a number greater than or equal to 0; and
- a is a number greater than 0.

**9.** The rechargeable battery cell (2, 20, 40) according to claim 8,

in which the compound has the composition $Li_xM'_yM''_zO_a$, in which M' is manganese and M" is cobalt, and wherein x, y and z are preferably equal to 1 and a is preferably equal to 4.

**10.** The rechargeable battery cell (2, 20, 40) according to claim 8 or 9, in which the compound has the composition $Li_xM'_yM''_zO_a$, in which M' comprises nickel and manganese and M" is cobalt and which has the formula $Li_xNi_{y1}Mn_{y2}Co_zO_a$, wherein y1 and y2 are independently of one another a number greater than 0

**11.** The rechargeable battery cell (2, 20, 40) according to claim 8, in which the compound has the composition $Li_xM'_yM''^1_{z1}M''^2_{z2}O_4$, wherein $M''^1$ is at least one element selected from the group formed by the elements of groups 2, 3, 4, 5, 6, 7, 8, 9, 10, 11, 12, 13, 14, 15 and 16 of the periodic table of the elements,$M''^2$ is phosphorus, z1 is a number greater than or equal to 0 and z2 has the value 1.

**12.** The rechargeable battery cell (2, 20, 40) according to claim 11,

in which the compound has the composition $Li_xM'_yM''^1_{z1}PO_4$, in which M' is iron and $M''^1$ is manganese, wherein the compound preferably has the composition $Li(Fe_{0.3}Mn_{0.7})PO_4$.

**13.** The rechargeable battery cell (2, 20, 40) according to any one of the preceding claims, in which the substituents $R^1$, $R^2$, $R^3$ and $R^4$ of the first conducting salt are selected independently of one another from the group formed by

- $C_1$-$C_6$ alkyl; preferably from $C_2$-$C_4$ alkyl; particularly preferably from the alkyl groups 2-propyl, methyl and ethyl;
- $C_2$-$C_6$ alkenyl; preferably from $C_2$-$C_4$ alkenyl; particularly preferably from the alkenyl groups ethenyl and propenyl;
- $C_2$-$C_6$ alkynyl; preferably from $C_2$-$C_4$ alkynyl;
- $C_3$-$C_6$ cycloalkyl;
- phenyl; and
- $C_5$-$C_7$ heteroaryl.

**14.** The rechargeable battery cell (2, 20, 40) according to any one of the preceding claims, in which at least one of the substituents $R^1$, $R^2$, $R^3$ and $R^4$ of the first conducting salt is substituted by at least one fluorine atom and/or by at least one chemical group, wherein the chemical group is selected from the group formed by $C_1$-$C_4$ alkyl, $C_2$-$C_4$ alkenyl, $C_2$-$C_4$ alkynyl, phenyl and benzyl.

**15.** The rechargeable battery cell (2, 20, 40) according to any one of the preceding claims, in which at least one of the substituents $R^1$, $R^2$, $R^3$ and $R^4$ of the first conducting salt is a $CF_3$ group or an $OSO_2CF_3$ group.

**16.** The rechargeable battery cell (2, 20, 40) according to any one of the preceding claims, in which the first conducting salt is selected from the group formed by

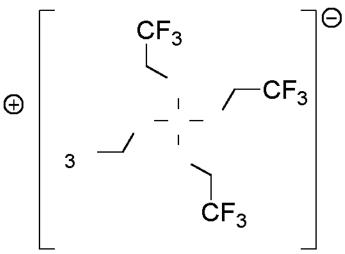

$Li[B(OCH_2CF_3)_4]$

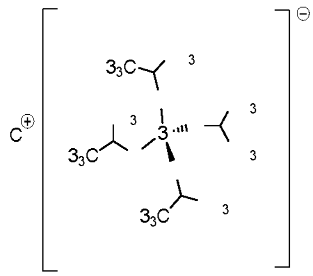

$Li[B(OCH(CF_3)_2)_4]$

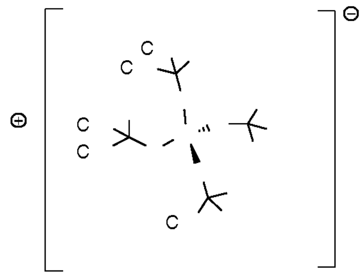

$Li[Al(OC(CF_3)_3)_4]$

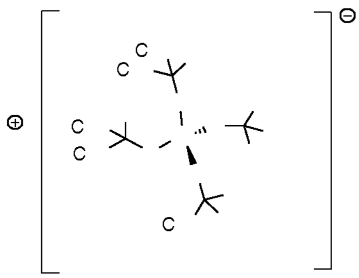

$Li[Al(OC(CH_3)(CF_3)_2)_4]$

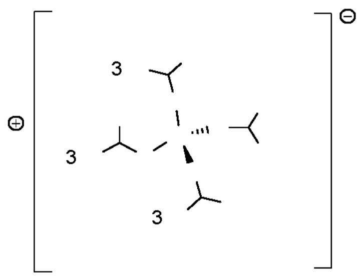

$Li[Al(OCH(CF_3)_2)_4]$.

**17.** The rechargeable battery cell (2, 20, 40) according to any one of the preceding claims, wherein the electrolyte comprises at least one second conducting salt different from the first conducting salt according to formula (I).

**18.** The rechargeable battery cell (2, 20, 40) according to claim 17, in which the second conducting salt of the electrolyte is an alkali metal compound, in particular a lithium compound, which is selected from the group formed by an aluminate, a halide, an oxalate, a borate, a phosphate, an arsenate and a gallate.

**19.** The rechargeable battery cell (2, 20, 40) according to claim 17 or 18,

in which the second conducting salt of the electrolyte is a lithium tetrahaloaluminate, in particular lithium tetrachloroaluminate.

**20.** The rechargeable battery cell (2, 20, 40) according to any one of the preceding claims, in which the electrolyte comprises at least one additive.

**21.** The rechargeable battery cell (2, 20, 40) according to claim 20,
in which the additive of the electrolyte is selected from the group formed by vinylene carbonate and its derivatives, vinylethylene carbonate and its derivatives, methylethylene carbonate and its derivatives, lithium (bisoxalato)borate, lithium difluoro(oxalato)borate, lithium tetrafluoro(oxalato)phosphate, lithium oxalate, 2-vinylpyridine, 4-vinylpyridine, cyclic exomethylene carbonates, sultones, cyclic and acyclic sulfonates, acyclic sulfites, cyclic and acyclic sulfinates, organic esters, inorganic acids, acyclic and cyclic alkanes, which acyclic and cyclic alkanes have a boiling point of at least 36°C at 1 bar, aromatic compounds, halogenated cyclic and acyclic sulfonylimides, halogenated cyclic and acyclic phosphate esters, halogenated cyclic and acyclic phosphines, halogenated cyclic and acyclic phosphites, halogenated cyclic and acyclic phosphazenes, halogenated cyclic and acyclic silylamines, halogenated cyclic and acyclic halogenated esters, halogenated cyclic and acyclic amides, halogenated cyclic and acyclic anhydrides, and halogenated organic heterocycles.

**22.** The rechargeable battery cell (2, 20, 40) according to any one of the preceding claims, in which the electrolyte has the composition

(i) 5 to 99.4% by weight sulfur dioxide,
(ii) 0.6 to 95% by weight of the first conducting salt,
(iii) 0 to 25% by weight of the second conducting salt and
(iv) 0 to 10% by weight of the additive,

based on the total weight of the electrolyte composition.

**23.** The rechargeable battery cell (2, 20, 40) according to any one of the preceding claims, in which the molar concentration of the first conducting salt is in the range from 0.01 mol/L to 10 mol/L, preferably from 0.05 mol/L to 10 mol/L, more preferably from 0.1 mol/L to 6 mol/L and most preferably from 0.2 mol/L to 3.5 mol/L based on the total volume of the electrolyte.

**24.** The rechargeable battery cell (2, 20, 40) according to any one of the preceding claims, in which the electrolyte comprises at least 0.1 mol $SO_2$, preferably at least 1 mol $SO_2$, more preferably at least 5 mol $SO_2$, more preferably at least 10 mol $SO_2$ and most preferably at least 20 mol $SO_2$ per mole of conducting salt.

**25.** The rechargeable battery cell (2, 20, 40) according to any one of the preceding claims, in which the positive electrode (4, 23, 44) comprises at least one metal compound which is selected from the group formed by a metal oxide, a metal halide and a metal phosphate, wherein the metal of the metal compound is preferably a transition metal of atomic numbers 22 to 28 of the periodic table of the elements, in particular cobalt, nickel, manganese or iron.

**26.** The rechargeable battery cell (2, 20, 40) according to any one of the preceding claims, in which the positive electrode (4, 23, 44) comprises at least one metal compound which has the chemical structure of a spinel, a layered oxide, a conversion compound or a polyanionic compound.

**27.** The rechargeable battery cell (2, 20, 40) according to any one of the preceding claims, in which the positive electrode (4, 23, 44) has a discharge element (34), which is preferably formed

- either planar in the form of a metal sheet or a metal foil, or
- three-dimensional in the form of a porous metal structure, in particular in the form of a metal foam (18).

**28.** The rechargeable battery cell (2, 20, 40) according to any one of the preceding claims, in which the positive electrode (4, 23, 44) and/or the negative electrode (5) comprises at least one binder, preferably a fluorinated binder, in particular a polyvinylidene fluoride and/or a terpolymer made of tetrafluoroethylene, hexafluoropropylene and vinylidene fluoride, or

a binder consisting of a polymer which is built up from monomeric structural units of a conjugated carboxylic

acid or from the alkali, alkaline earth or ammonium salt of said conjugated carboxylic acid or from a combination thereof, or

a binder consisting of a polymer based on monomeric styrene and butadiene structural units, or a binder from the group of carboxymethyl celluloses,

wherein the binder is preferably present in a concentration of at most 20% by weight, more preferably at most 15% by weight, more preferably at most 10% by weight, more preferably at most 7% by weight, more preferably at most 5% by weight and most preferably at most 2% by weight based on the total positive electrode weight.

**29.** The rechargeable battery cell (2, 20, 40) according to any one of the preceding claims, which comprises a plurality of negative electrodes (5, 22, 45) and a plurality of positive electrodes (4, 23, 44) which are stacked alternately in the housing (1, 28), wherein the positive electrodes and the negative electrodes (5, 22, 45) are preferably each electrically separated from one another by separators (11, 13, 21).

## Revendications

**1.** Cellule de batterie rechargeable (2, 20, 40), contenant un métal actif, au moins une électrode positive (4, 23, 44) avec un élément de décharge (26), au moins une électrode négative (5, 22, 45) avec un élément de décharge (27), un boîtier (1, 28) et un électrolyte,

dans laquelle l'électrode négative (5, 22, 45) contient du lithium métallique comme matériau actif au moins dans l'état chargé de la cellule de batterie rechargeable

et dans laquelle l'électrolyte est à base de $SO_2$ et contient au moins un premier sel conducteur qui présente la formule (I)

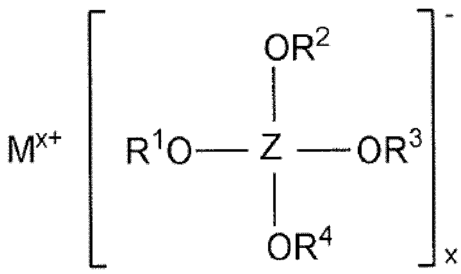

formule (I)

dans laquelle

- M est un métal choisi dans le groupe formé par les métaux alcalins, les métaux alcalino-terreux, les métaux du groupe 12 du tableau périodique des éléments et l'aluminium ;
- x est un nombre entier de 1 à 3 ;
- les substituants $R^1$, $R^2$, $R^3$ et $R^4$ sont choisis, indépendamment les uns des autres, dans le groupe formé par les groupes alkyle en $C_1$-$C_{10}$, alcényle en $C_2$-$C_{10}$, alcynyle en $C_2$-$C_{10}$, cycloalkyle en $C_3$-$C_{10}$, aryle en $C_6$-$C_{14}$ et hétéroaryle en $C_5$-$C_{14}$ ; et
- dans laquelle Z est l'aluminium ou le bore.

**2.** Cellule de batterie rechargeable (2, 20, 40) selon la revendication 1,
dans laquelle le lithium métallique peut être déposé sur l'élément de décharge (27) de l'électrode négative (5, 22, 45) lors de la charge de la cellule de batterie rechargeable.

**3.** Cellule de batterie rechargeable (2, 20, 40) selon la revendication 1 ou 2, dans laquelle le lithium métallique se trouve sur l'élément de décharge (27) de l'électrode négative (5, 22, 45) à l'état chargé de la cellule de batterie rechargeable.

**4.** Cellule de batterie rechargeable (2, 20, 40) selon l'une des revendications 1 à 3,
dans laquelle le lithium métallique est déjà présent sur l'élément de décharge (27) de l'électrode négative (5, 22, 45) avant la première charge de la cellule de batterie rechargeable.

**5.** Cellule de batterie rechargeable (2, 20, 40) selon l'une des revendications précédentes, dans laquelle (5, 22, 45) l'élément de décharge (27) de l'électrode négative (5, 22, 45) est réalisé de manière

- plane sous la forme d'une tôle métallique ou d'une feuille métallique, ou
- tridimensionnelle sous la forme d'une structure métallique poreuse, en particulier sous la forme d'une mousse métallique (18).

**6.** Cellule de batterie rechargeable (2, 20, 40) selon l'une des revendications précédentes, dans laquelle l'élément de décharge (27) de l'électrode négative (5, 22, 45) est formé au moins partiellement d'un matériau stockant le lithium choisi dans le groupe formé par

- le carbone, en particulier dans la modification graphite,
- un matériau de formation d'alliage de lithium,
- un matériau d'intercalation de lithium qui ne contient pas de carbone, en particulier le titanate de lithium (par exemple $Li_4Ti_5O_{12}$), et
- un matériau de conversion, en particulier un oxyde de métal de transition.

**7.** Cellule de batterie rechargeable (2, 20, 40) selon la revendication 6, dans laquelle le matériau de formation d'alliage de lithium est choisi

- dans le groupe formé par les métaux et alliages métalliques stockant le lithium, de préférence Si, Ge, Sn, $SnCo_xC_y$ ou $SnSi_x$, ou
- dans le groupe formé par les oxydes de métaux et d'alliages métalliques stockant le lithium, de préférence $SnO_x$, $SiO_x$, les verres d'oxydes de Sn et Si.

**8.** Cellule de batterie rechargeable (2, 20, 40) selon l'une des revendications précédentes, dans laquelle l'électrode positive (4, 23, 44) contient comme matériau actif au moins un composé qui présente de préférence la composition $Li_xM'_yM''_zO_a$, dans laquelle

- M' est au moins un métal choisi dans le groupe formé par les éléments Ti, V, Cr, Mn, Fe, Co, Ni, Cu et Zn ;
- M" est au moins un élément choisi dans le groupe formé par les éléments 2, 3, 4, 5, 6, 7, 8, 9, 10, 11, 12, 13, 14, 15 et 16 du tableau périodique des éléments ;
- x et y sont, indépendamment l'un de l'autre, des nombres supérieurs à 0 ;
- z est un nombre supérieur ou égal à 0 ; et
- a est un nombre supérieur à 0.

**9.** Cellule de batterie rechargeable (2, 20, 40) selon la revendication 8,

dans laquelle le composé présente la composition $Li_xM'_yM''_zO_a$, dans laquelle M' est le manganèse et M" est le cobalt, et
dans laquelle, de préférence, x, y et z sont égaux à 1 et a est égal à 4.

**10.** Cellule de batterie rechargeable (2, 20, 40) selon la revendication 8 ou 9, dans laquelle le composé présente la composition $Li_xM'_yM''_zO_a$, dans laquelle M' comprend le nickel et le manganèse et M" est le cobalt, et présente la formule $Li_xNi_{y1}Mn_{y2}CoO_a$, dans laquelle y1 et y2 sont, indépendamment l'un de l'autre, des nombres supérieurs à 0.

**11.** Cellule de batterie rechargeable (2, 20, 40) selon la revendication 8, dans laquelle le composé présente la composition $Li_xM'_yMn''^1_{z1}M''^2_{z2}O_4$, dans laquelle $M''^1$ est au moins un élément choisi dans le groupe formé par les éléments des groupes 2, 3, 4, 5, 6, 7, 8, 9, 10, 11, 12, 13, 14, 15 et 16 du tableau périodique des éléments, $M''^2$ est le phosphore, z1 est un nombre supérieur ou égal à 0 et z2 a la valeur 1.

**12.** Cellule de batterie rechargeable (2, 20, 40) selon la revendication 11,

dans laquelle le composé présente la composition $Li_xM'_yMn''^1_{z1}PO_4$, dans laquelle M' est le fer et $M''^1$ est le manganèse,
le composé présentant de préférence la composition $Li(Fe_{0,3}Mn_{0,7})PO_4$.

**13.** Cellule de batterie rechargeable (2, 20, 40) selon l'une des revendications précédentes,

dans laquelle les substituants $R^1$, $R^2$, $R^3$ et $R^4$ du premier sel conducteur sont choisis, indépendamment les uns des autres, dans le groupe formé par les groupes :

- alkyle en $C_1$-$C_6$ ; de préférence alkyle en $C_2$-$C_4$ ; de manière particulièrement préférée les groupes alkyle 2-propyle, méthyle et éthyle ;
- alcényle en $C_2$-$C_6$ ; de préférence alcényle en $C_2$-$C_4$, de manière particulièrement préférée les groupes alcényle éthényle et propényle ;
- alcynyle en $C_2$-$C_6$ ; de préférence alcynyle en $C_2$-$C_4$ ;
- cycloalkyle en $C_3$-$C_6$ ;
- phényle ; et
- hétéroaryle en $C_5$-$C_7$.

**14.** Cellule de batterie rechargeable (2, 20, 40) selon l'une des revendications précédentes,
dans laquelle au moins l'un des substituants $R^1$, $R^2$, $R^3$ et $R^4$ du premier sel conducteur est substitué par au moins un atome de fluor et/ou par au moins un groupe chimique, ledit groupe chimique étant choisi dans le groupe formé par les groupes alkyle en $C_1$-$C_4$, alcényle en $C_2$-$C_4$, alcynyle en $C_2$-$C_4$, phényle et benzyle.

**15.** Cellule de batterie rechargeable (2, 20, 40) selon l'une des revendications précédentes,
dans laquelle au moins l'un des substituants $R^1$, $R^2$, $R^3$ et $R^4$ du premier sel conducteur est un groupe $CF_3$ ou un groupe $OSO_2CF_3$.

**16.** Cellule de batterie rechargeable (2, 20, 40) selon l'une des revendications précédentes,
dans laquelle le premier sel conducteur est choisi dans le groupe formé par :

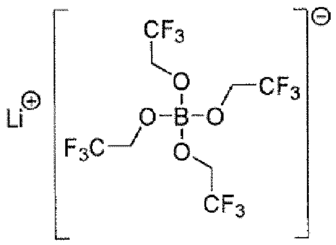

$Li[B(OCH_2CF_3)_4]$

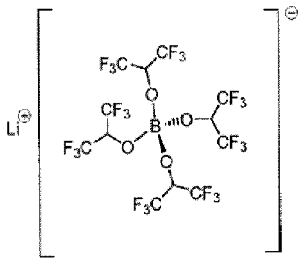

$Li[B(OCH(CF_3)_2)_4]$

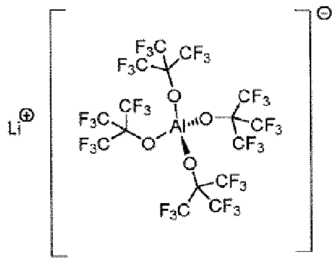

$Li[Al(OC(CF_3)_3)_4]$

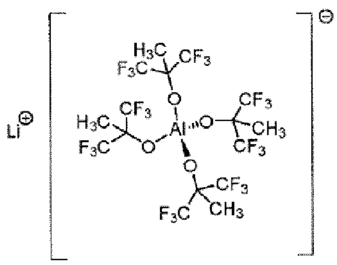

$Li[Al(OC(CH_3)(CF_3)_2)_4]$

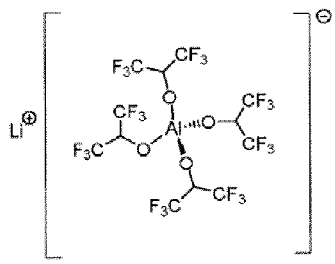

$Li[Al(OCH(CF_3)_2)_4]$.

**17.** Cellule de batterie rechargeable (2, 20, 40) selon l'une des revendications précédentes,
dans laquelle l'électrolyte contient au moins un deuxième sel conducteur différent du premier sel conducteur selon la formule (I).

**18.** Cellule de batterie rechargeable (2, 20, 40) selon la revendication 17,
dans laquelle le deuxième sel conducteur de l'électrolyte est un composé de métal alcalin, en particulier un composé de lithium, choisi dans le groupe formé par un aluminate, un halogénure, un oxalate, un borate, un phosphate, un arséniate et un gallate.

**19.** Cellule de batterie rechargeable (2, 20, 40) selon la revendication 17 ou 18, dans laquelle le deuxième sel conducteur de l'électrolyte est un tétrahalogénoaluminate de lithium, en particulier le tétrachloroaluminate de lithium.

**20.** Cellule de batterie rechargeable (2, 20, 40) selon l'une des revendications précédentes, dans laquelle l'électrolyte contient au moins un additif.

**21.** Cellule de batterie rechargeable (2, 20, 40) selon la revendication 20, dans laquelle l'additif de l'électrolyte est choisi dans le groupe formé par le carbonate de vinylène et ses dérivés, le carbonate de vinyléthylène et ses dérivés, le carbonate de méthyléthylène et ses dérivés, le (bisoxalato)borate de lithium, le difluoro(oxalato)borate de lithium, le tétrafluoro(oxalato)phosphate de lithium, l'oxalate de lithium, le 2-vinylpyridine, le 4-vinylpyridine, les carbonates d'exométhylène cycliques, les sultones, les sulfonates cycliques et acycliques, les sulfites acycliques, les sulfinates cycliques et acycliques, les esters organiques d'acides inorganiques, les alcanes acycliques et cycliques, lesquels alcanes acycliques et cycliques présentent un point d'ébullition à 1 bar d'au moins 36 °C, les composés aromatiques, les sulfonylimides cycliques et acycliques halogénés, les esters de phosphate cycliques et acycliques halogénés, les phosphines cycliques et acycliques halogénées, les phosphites cycliques et acycliques halogénés, les phosphazènes cycliques et acycliques halogénés, les silylamines cycliques et acycliques halogénées, les esters cycliques et acycliques halogénés, les amides cycliques et acycliques halogénés, les anhydrides cycliques et acycliques halogénés et les hétérocycles organiques halogénés.

**22.** Cellule de batterie rechargeable (2, 20, 40) selon l'une des revendications précédentes, dans laquelle l'électrolyte présente la composition suivante :

(i) 5 à 99,4 % en poids de dioxyde de soufre,
(ii) 0,6 à 95 % en poids du premier sel conducteur,
(iii) 0 à 25 % en poids du deuxième sel conducteur et
(iv) 0 à 10 % en poids de l'additif,

par rapport au poids total de la composition de l'électrolyte.

**23.** Cellule de batterie rechargeable (2, 20, 40) selon l'une des revendications précédentes, dans laquelle la concentration molaire du premier sel conducteur se situe dans la plage de 0,01 mol/l à 10 mol/l, de préférence de 0,05 mol/l à 10 mol/l, plus préférentiellement de 0,1 mol/l à 6 mol/l et de manière particulièrement préférée de 0,2 mol/l à 3,5 mol/l, par rapport au volume total de l'électrolyte.

**24.** Cellule de batterie rechargeable (2, 20, 40) selon l'une des revendications précédentes, dans laquelle l'électrolyte contient au moins 0,1 mole de $SO_2$, de préférence au moins 1 mole de $SO_2$, plus préférentiellement au moins 5 moles de $SO_2$, encore plus préférentiellement au moins 10 moles de $SO_2$ et de manière particulièrement préférée au moins 20 moles de $SO_2$ par mole de sel conducteur.

**25.** Cellule de batterie rechargeable (2, 20, 40) selon l'une des revendications précédentes, dans laquelle l'électrode positive (4, 23, 44) contient au moins un composé métallique choisi dans le groupe formé par un oxyde métallique, un halogénure métallique et un phosphate métallique, le métal du composé métallique étant de préférence un métal de transition des numéros atomiques 22 à 28 du tableau périodique des éléments, en particulier le cobalt, le nickel, le manganèse ou le fer.

**26.** Cellule de batterie rechargeable (2, 20, 40) selon l'une des revendications précédentes, dans laquelle l'électrode positive (4, 23, 44) contient au moins un composé métallique qui possède la structure chimique d'un spinelle, d'un oxyde stratifié, d'un composé de conversion ou d'un composé polyanionique.

**27.** Cellule de batterie rechargeable (2, 20, 40) selon l'une des revendications précédentes, dans laquelle l'électrode positive (4, 23, 44) présente un élément de décharge (34) qui est de préférence réalisé de manière

- plane sous la forme d'une tôle métallique ou d'une feuille métallique, ou
- tridimensionnelle sous la forme d'une structure métallique poreuse, en particulier sous la forme d'une mousse métallique (18).

**28.** Cellule de batterie rechargeable (2, 20, 40) selon l'une des revendications précédentes,

dans laquelle l'électrode positive (4, 23, 44) et/ou l'électrode négative (5) contient au moins un liant, de préférence un liant fluoré, en particulier un polyfluorure de vinylidène et/ou un terpolymère composé de tétrafluoroéthylène,

d'hexafluoropropylène et de fluorure de vinylidène, ou
un liant constitué d'un polymère composé d'unités structurales monomères d'un acide carboxylique conjugué ou du sel de métal alcalin, de métal alcalino-terreux ou d'ammonium de cet acide carboxylique conjugué ou d'une combinaison de ceux-ci, ou
un liant constitué d'un polymère qui est basé sur des unités structurales monomères de styrène et de butadiène, ou qui contient un liant du groupe des carboxyméthylcelluloses,
le liant étant de préférence présent à une concentration d'au plus 20 % en poids, plus préférentiellement d'au plus 15 % en poids, plus préférentiellement d'au plus 10 % en poids, plus préférentiellement d'au plus 7 % en poids, plus préférentiellement d'au plus 5 % en poids et de manière particulièrement préférée d'au plus 2 % en poids par rapport au poids total de l'électrode positive.

**29.** Cellule de batterie rechargeable (2, 20, 40) selon l'une des revendications précédentes,
lequel comprend plusieurs électrodes négatives (5, 22, 45) et plusieurs électrodes positives (4, 23, 44) qui sont disposées alternativement empilées dans le boîtier (1, 28), les électrodes positives et les électrodes négatives (5, 22, 45) étant de préférence chaque fois séparées électriquement les unes des autres par des séparateurs (11, 13, 21).

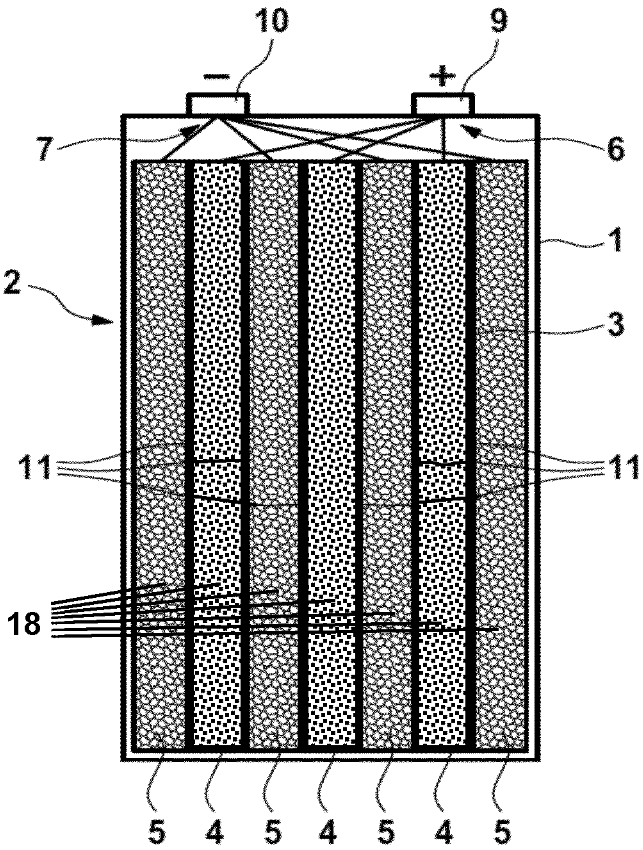


Fig. 1

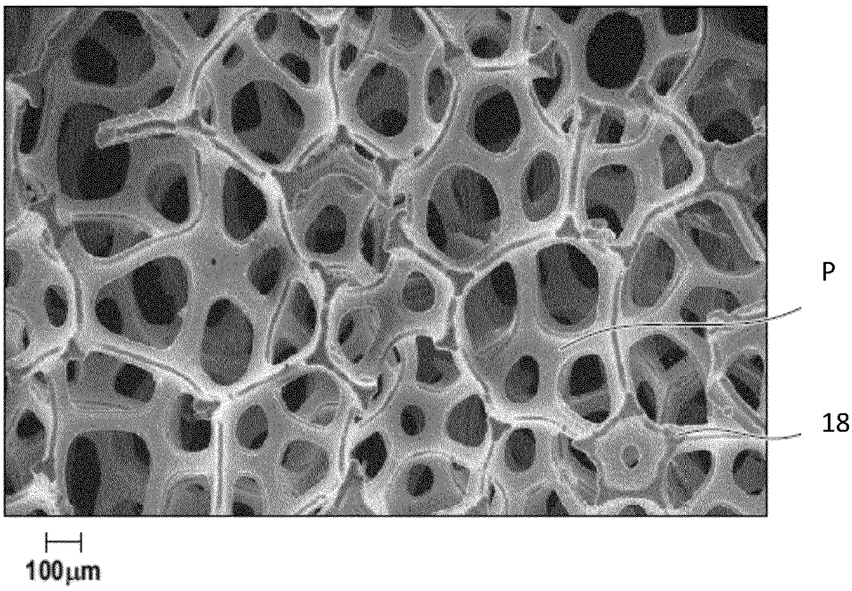


Fig. 2

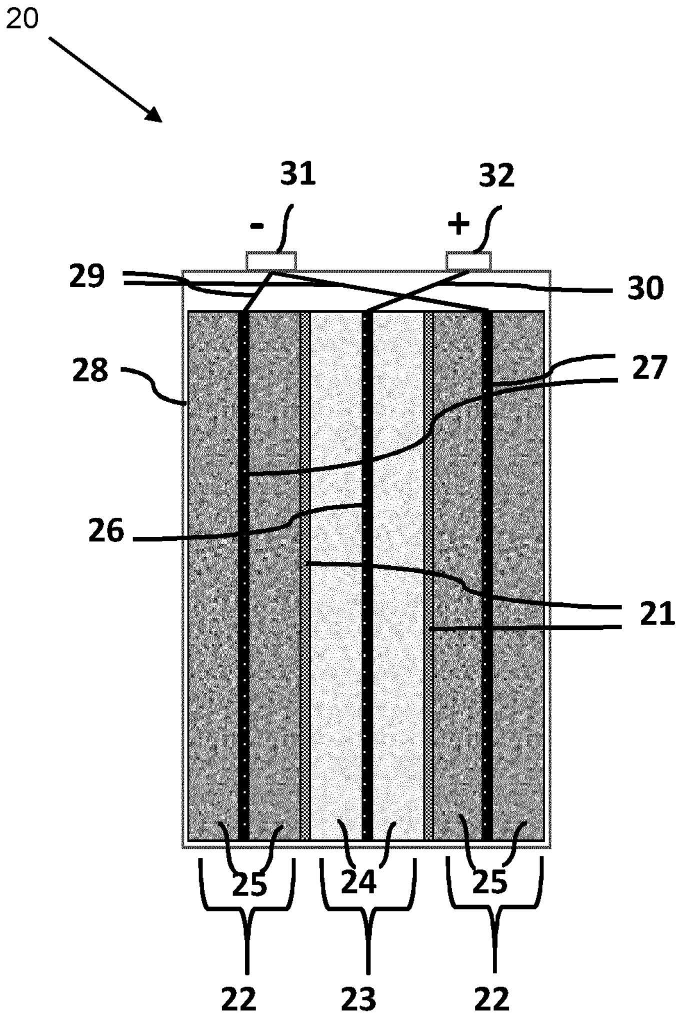


Fig. 3

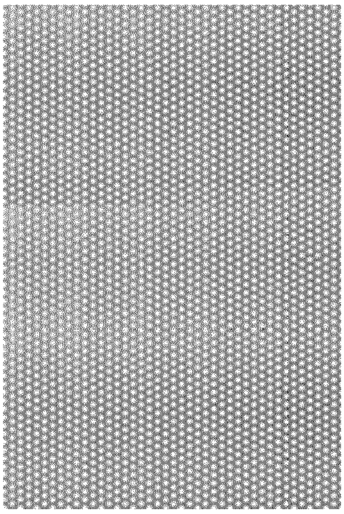

Fig. 4

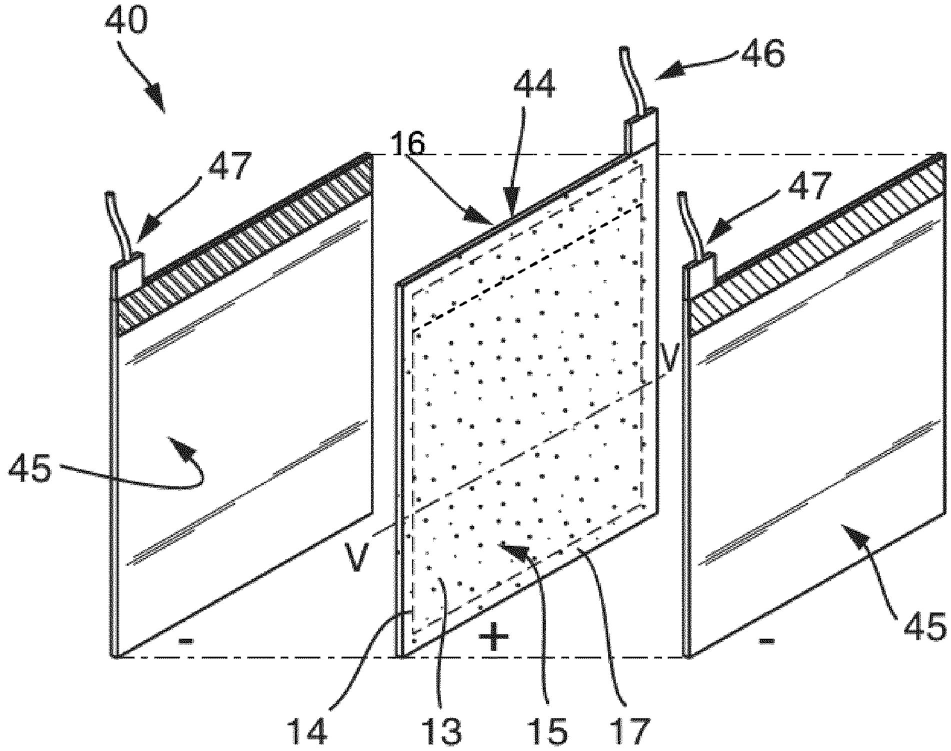


Fig. 5

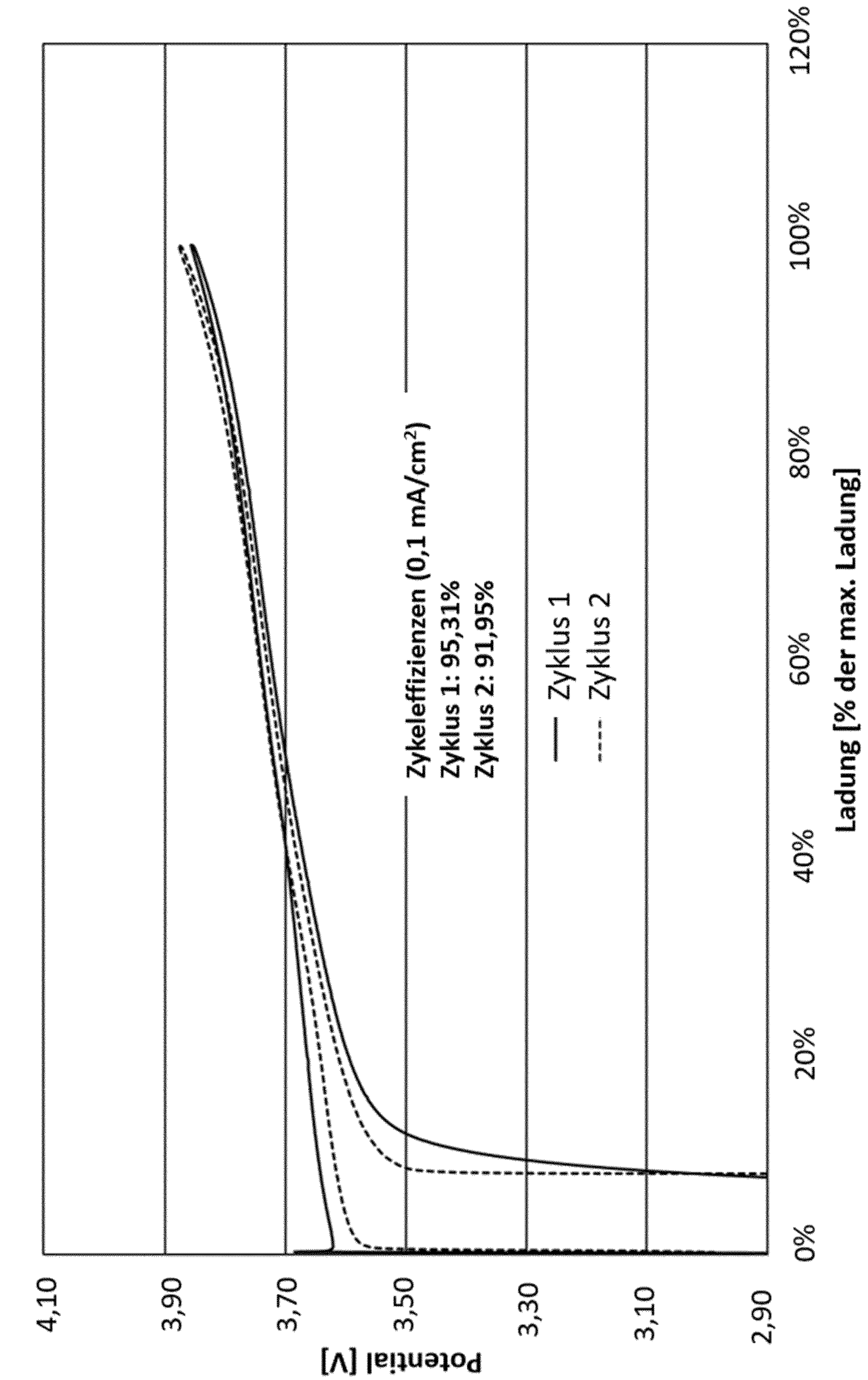
Potential [V]
4,10
3,90
3,70
3,50
3,30
3,10
2,90
Ladung [% der max. Ladung]
0%
20%
40%
60%
80%
100%
120%
Zykeleffizienzen (0,1 mA/cm²)
Zyklus 1: 95,31%
Zyklus 2: 91,95%
Zyklus 1
Zyklus 2

Fig. 6

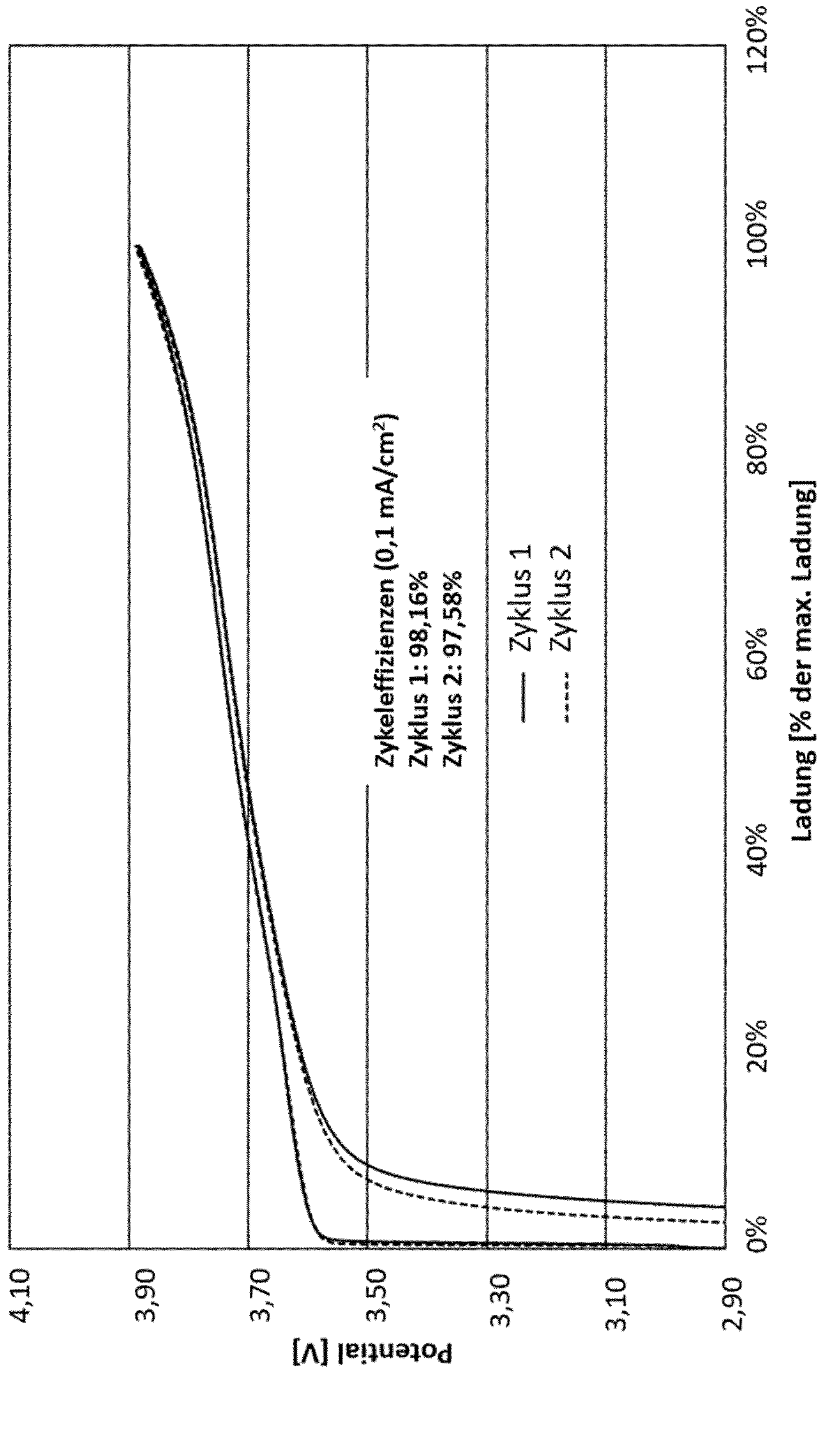
Zykeleffizienzen (0,1 mA/cm²)
Zyklus 1: 98,16%
Zyklus 2: 97,58%
Zyklus 1
Zyklus 2
Potential [V]
4,10
3,90
3,70
3,50
3,30
3,10
2,90
Ladung [% der max. Ladung]
0%
20%
40%
60%
80%
100%
120%

Fig. 7

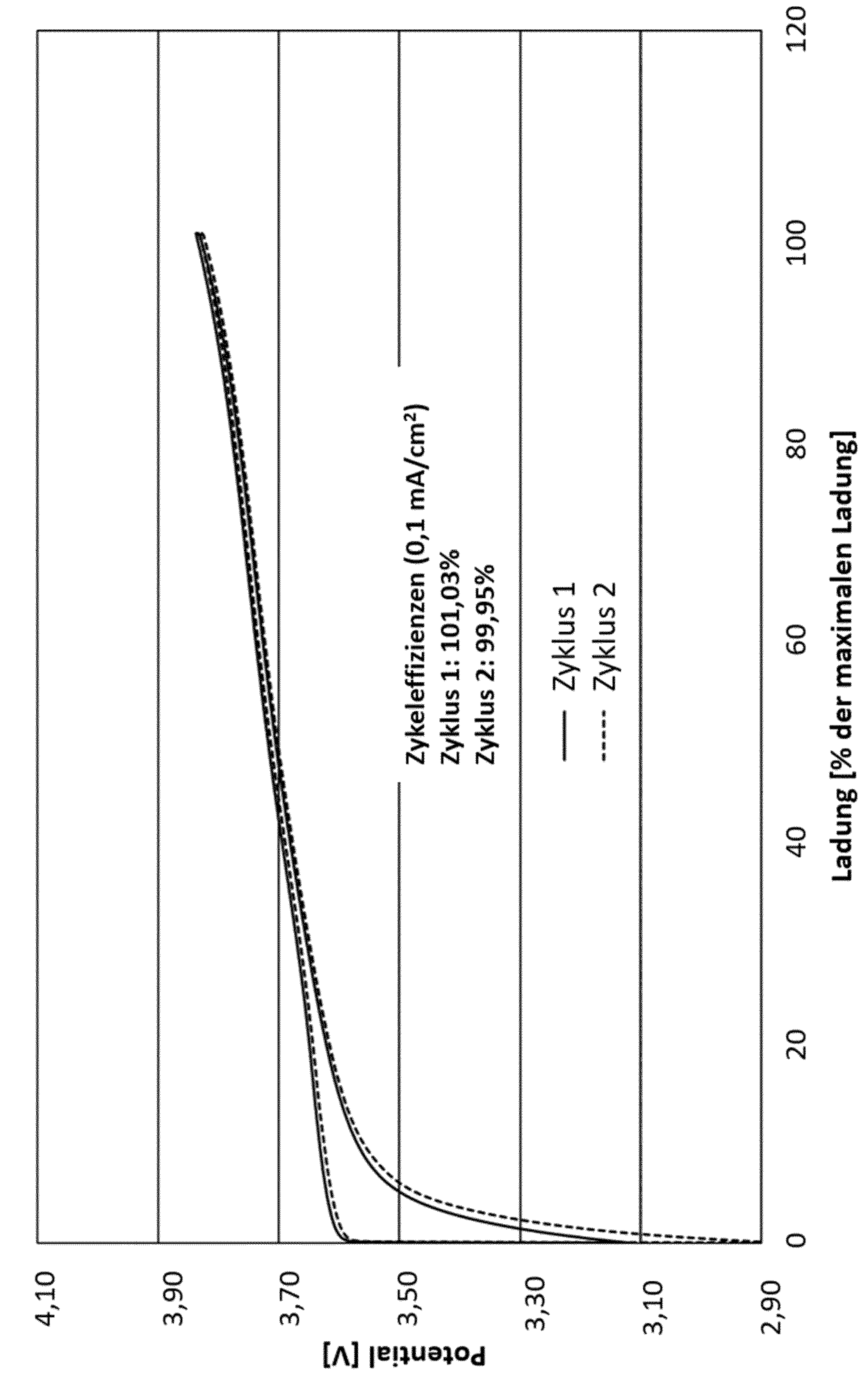
Zykeleffizienzen (0,1 mA/cm²)
Zyklus 1: 101,03%
Zyklus 2: 99,95%
Zyklus 1
Zyklus 2
Potential [V]
4,10
3,90
3,70
3,50
3,30
3,10
2,90
Ladung [% der maximalen Ladung]
0
20
40
60
80
100
120

Fig. 8

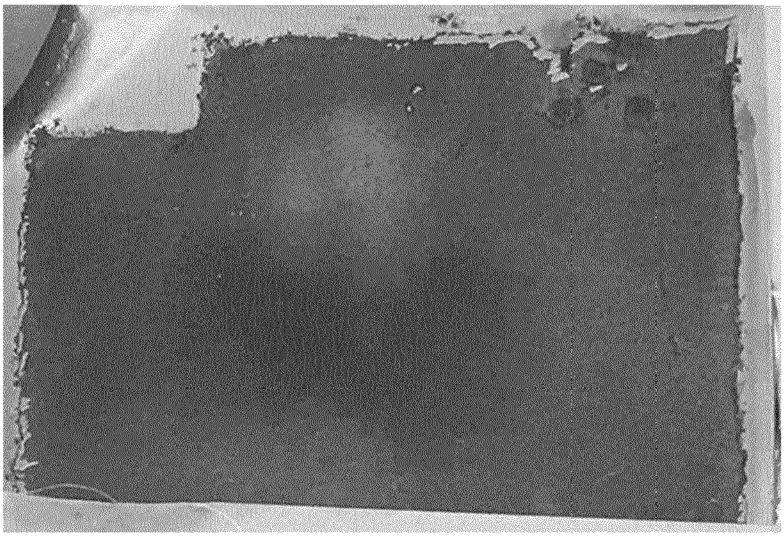

Fig. 9

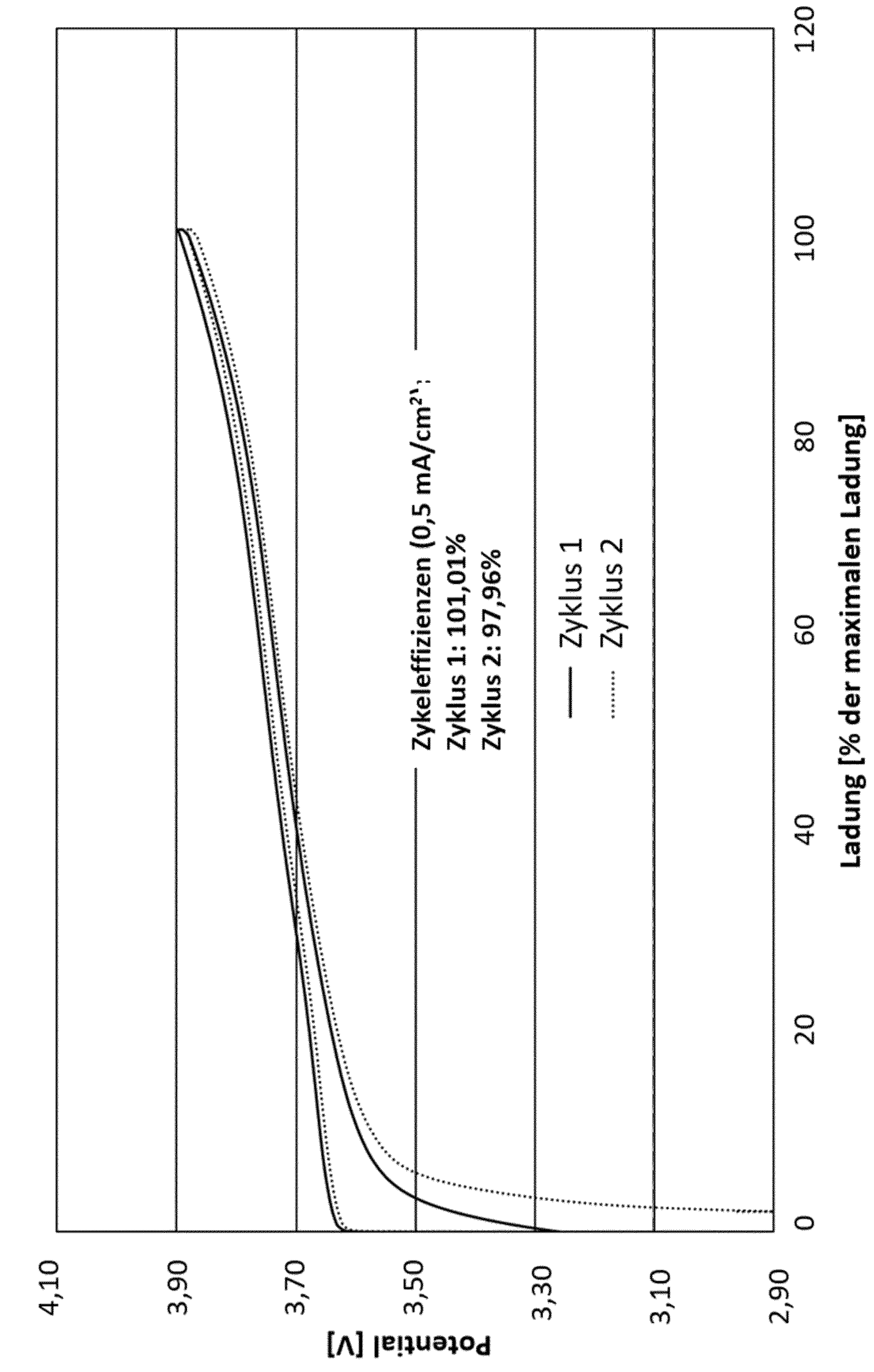
Zykeleffizienzen (0,5 mA/cm²):
Zyklus 1: 101,01%
Zyklus 2: 97,96%
Zyklus 1
Zyklus 2
Potential [V]
4,10
3,90
3,70
3,50
3,30
3,10
2,90
0
20
40
60
80
100
120
Ladung [% der maximalen Ladung]

Fig. 10

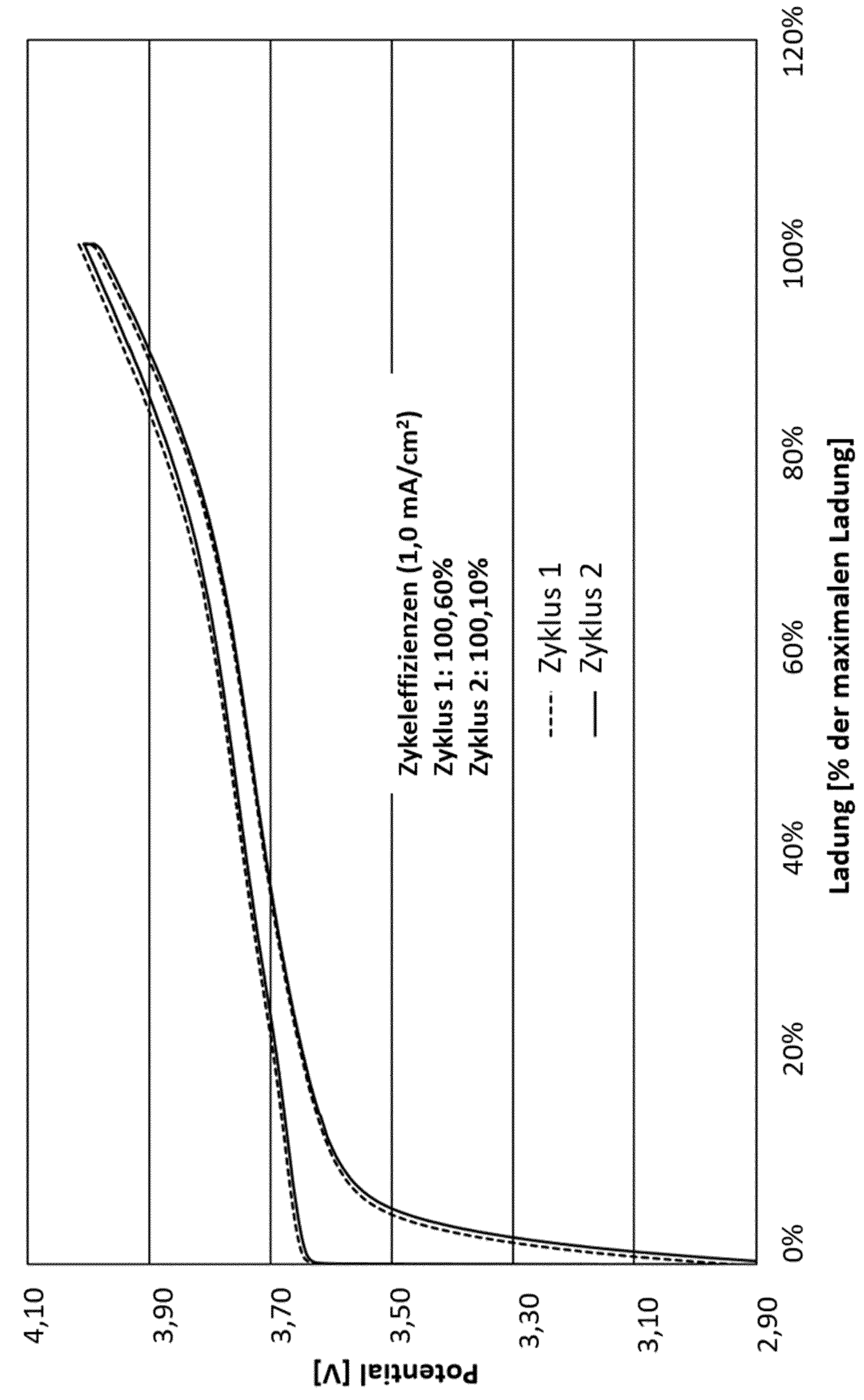
Potential [V]
4,10
3,90
3,70
3,50
3,30
3,10
2,90
0%
20%
40%
60%
80%
100%
120%
Ladung [% der maximalen Ladung]
Zykeleffizienzen (1,0 mA/cm²)
Zyklus 1: 100,60%
Zyklus 2: 100,10%
Zyklus 1
Zyklus 2

Fig. 11

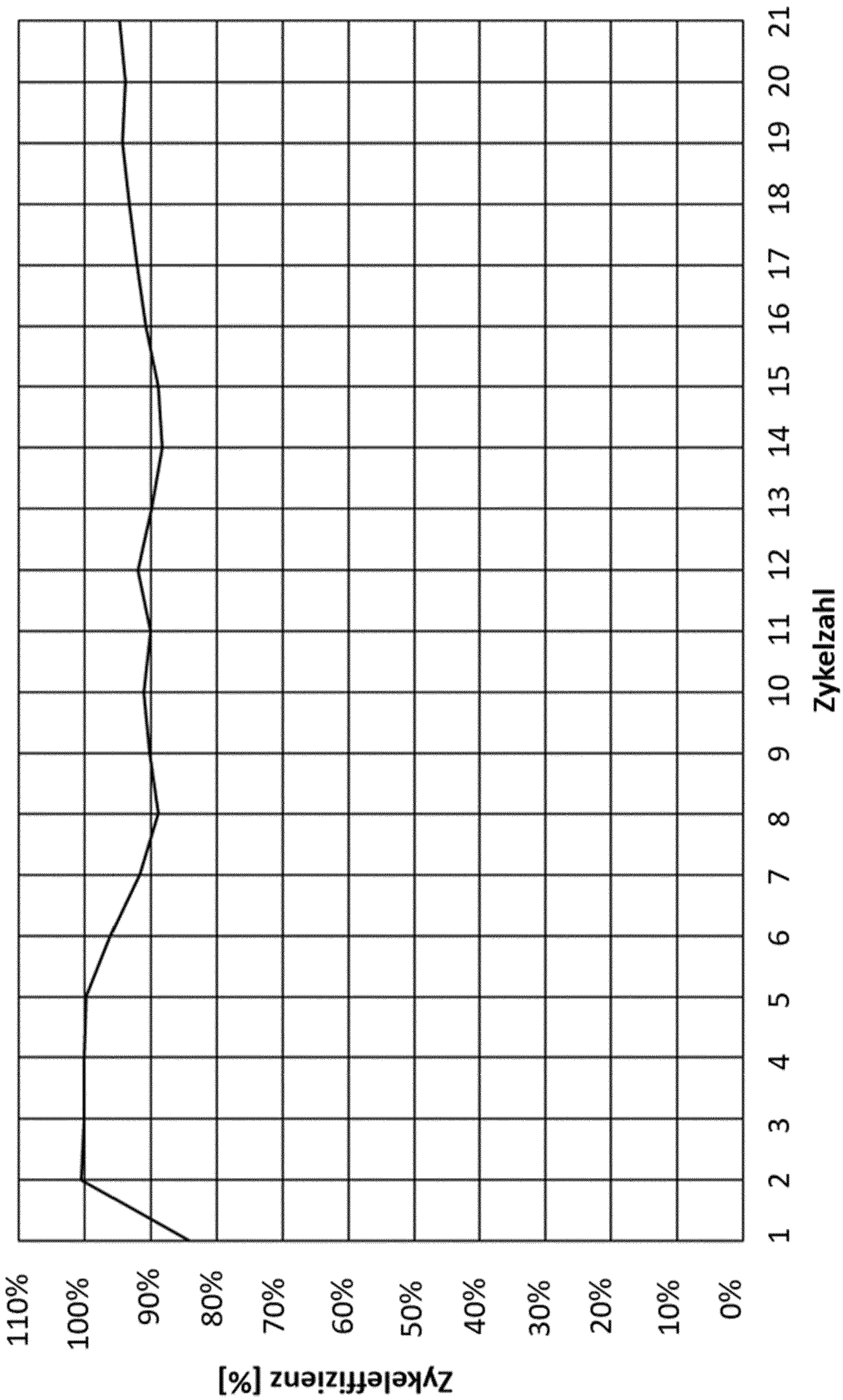
Zykeleffizienz [%]
110%
100%
90%
80%
70%
60%
50%
40%
30%
20%
10%
0%
Zykelzahl
1
2
3
4
5
6
7
8
9
10
11
12
13
14
15
16
17
18
19
20
21

Fig. 12

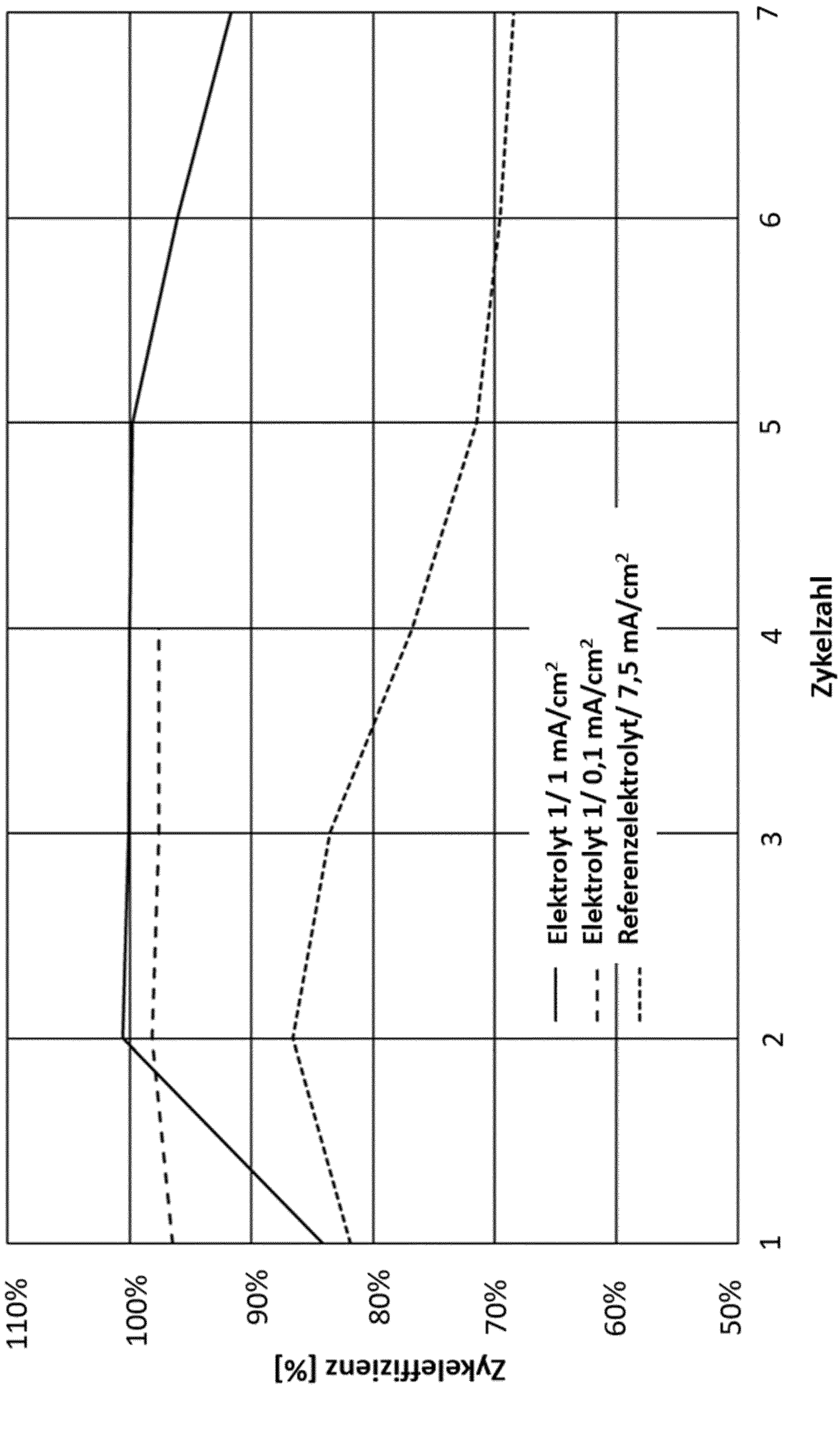
Zykeleffizienz [%]
110%
100%
90%
80%
70%
60%
50%
1
2
3
4
5
6
7
Zykelzahl
Elektrolyt 1/ 1 mA/cm²
Elektrolyt 1/ 0,1 mA/cm²
Referenzelektrolyt/ 7,5 mA/cm²

Fig. 13

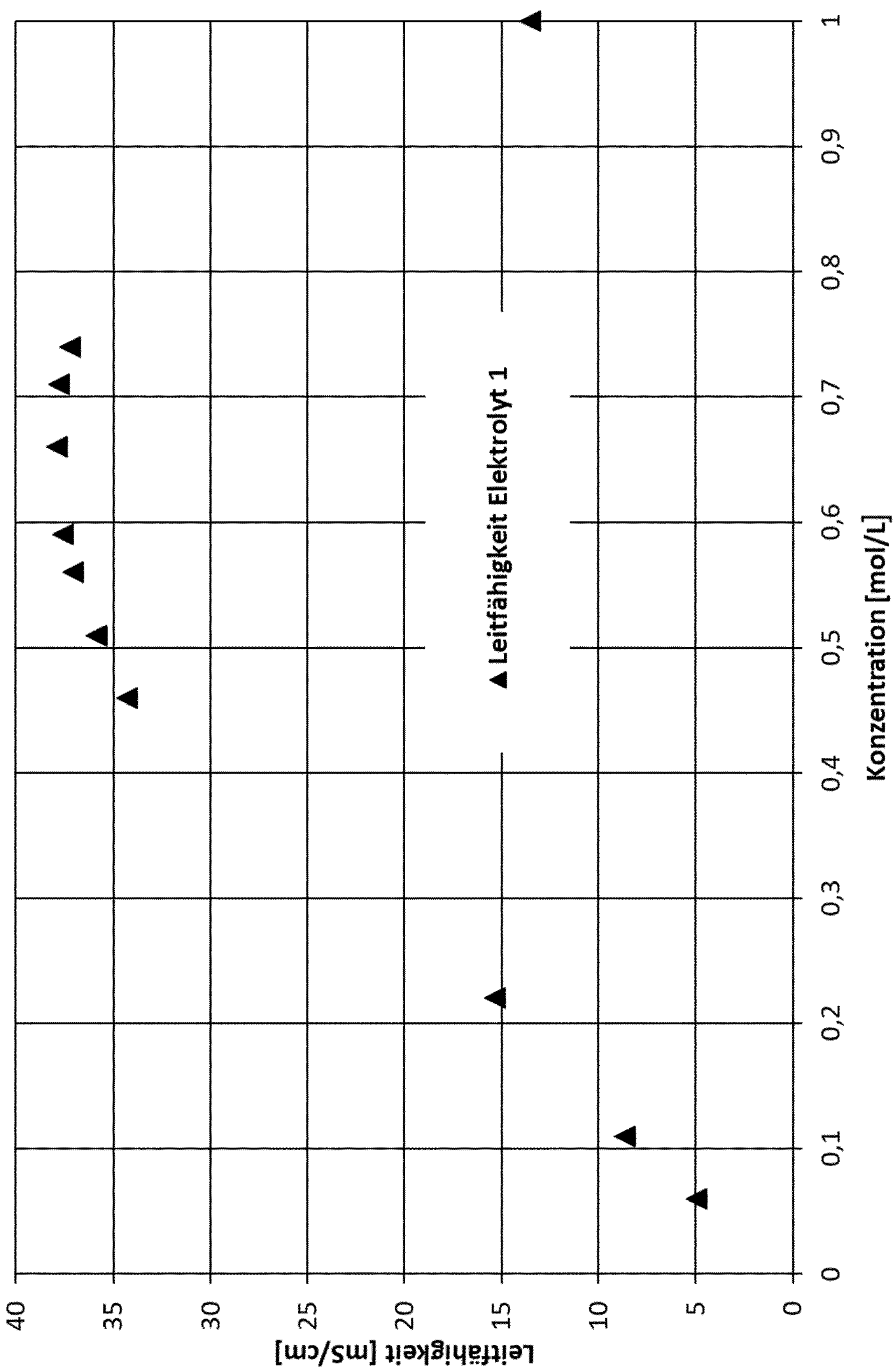
Leitfähigkeit [mS/cm]
40
35
30
25
20
15
10
5
0
0
0,1
0,2
0,3
0,4
0,5
0,6
0,7
0,8
0,9
1
Konzentration [mol/L]
▲ Leitfähigkeit Elektrolyt 1

Fig. 14

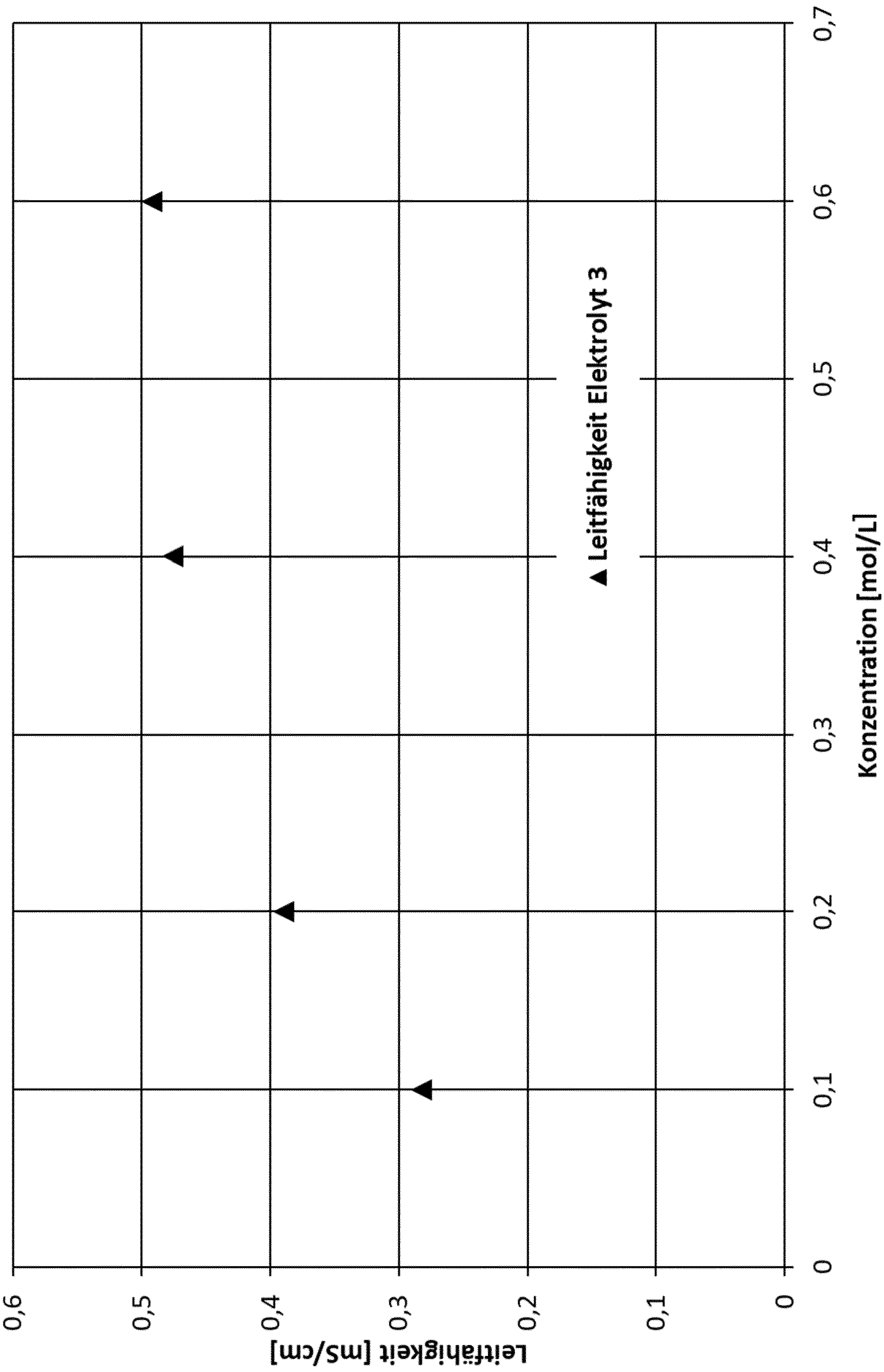

Leitfähigkeit [mS/cm]
0,6
0,5
0,4
0,3
0,2
0,1
0
▲ Leitfähigkeit Elektrolyt 3
0
0,1
0,2
0,3
0,4
0,5
0,6
0,7
Konzentration [mol/L]


Fig. 15

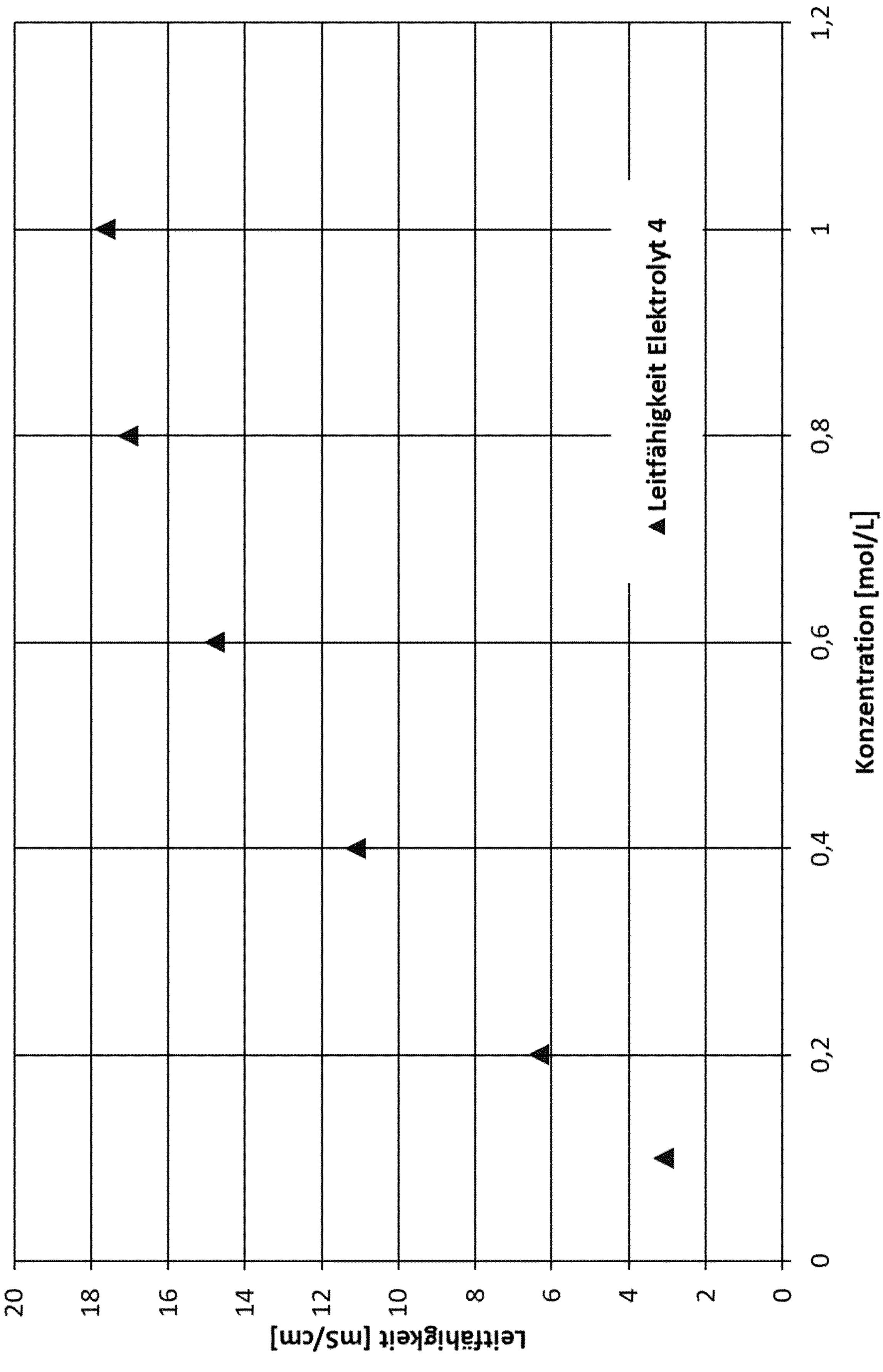
Leitfähigkeit [mS/cm]
20
18
16
14
12
10
8
6
4
2
0
0
0,2
0,4
0,6
0,8
1
1,2
Konzentration [mol/L]
Leitfähigkeit Elektrolyt 4

Fig. 16

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4306858 B
- JP 2001143750 A
- US 4891281 A
- US 7901811 B2
- EP 2954588 B1


### In der Beschreibung aufgeführte Nicht-Patentliteratur


- **XIN-BING CHENG ; TING-ZHENG HOU ; RUI ZHANG ; HONG-JIE PENG ; CHEN-ZI ZHAO ; JIA-QI HUANG ; QIANG ZHANG.** Dendrite-Free Lithium Deposition Induced by Uniformly Distributed Lithium Ions for Efficient Lithium Metal Batteries. *Adv. Mater.,* 2016, vol. 28, 2888-2895
- **AUTOREN GAO et al.** *IONICS,* 16. Mai 2019, vol. 25 (9), 4137-4147
- **AUTOREN OH et al.** *JOURNAL OF POWER SOURCES,* 01. Oktober 1997, vol. 68 (2), 338-343
- **I. KROSSING.** *Chem. Eur. J.,* 2001, vol. 7, 490
- **S. M. IVANOVA et al.** *Chem. Eur. J.,* 2001, vol. 7, 503
- **TSUJIOKA et al.** *J. Electrochem. Soc.,* 2004, vol. 151, A1418